# EUROPÄISCHE PATENTSCHRIFT

(11) **EP 3 279 470 B1**
(45) Veröffentlichungstag und Bekanntmachung des Hinweises auf die Patenterteilung: **03.11.2021**
(21) Anmeldenummer: 16183144.1
(22) Anmeldetag: 06.08.2016
(51) Int. Cl.: F03D 17/00

(54) **VERFAHREN ZUR PITCH-WINKELMESSUNG UND/ODER ZUM AUFBAU EINES MESSSYSTEMS ZUR PITCH-WINKELMESSUNG**
METHOD FOR PITCH ANGLE MEASURING AND/OR FOR ESTABLISHING A MEASURING SYSTEM FOR PITCH ANGLE MEASURING
PROCÉDÉ DE MESURE DE L'ANGLE DE PAS ET/OU DESTINÉ À L'ÉTABLISSEMENT D'UN SYSTÈME DE MESURE DE L'ANGLE DE PAS

(43) Veröffentlichungstag der Anmeldung: 07.02.2018
(73) Patentinhaber: Nidec SSB Wind Systems GmbH, 48499 Salzbergen (DE)
(72) Erfinder: BERTOLOTTI, Fabio, 48455 Bad Bentheim (DE)
(74) Vertreter: Bossmeyer, Jörg Peter

(56) Entgegenhaltungen:
- US-A1- 2010 121 606
- US-A1- 2011 285 129
- US-A1- 2013 302 161

## Beschreibung

Die Erfindung betrifft ein Verfahren zur Pitch-Winkelmessung und/oder zum Aufbau eines Messsystems zur Pitch-Winkelmessung an einem eine Blattwurzel aufweisenden und sich in Richtung einer Blattlängsachse erstreckenden Rotorblatt einer Windkraftanlage, welches mit seiner Blattwurzel an einer um eine Rotorachse drehenden oder drehbaren Rotornabe der Windkraftanlage um die Blattlängsachse drehbar gelagert ist oder wird, wobei im Abstand zur Blattwurzel wenigstens ein Profilsehnenrichtungsindikator fest mit dem Rotorblatt verbunden wird, der eine Profilsehnenrichtungsindikator-Richtung definiert, die indikativ für eine Richtung einer Profilsehne des Rotorblatts am Ort des Profilsehnenrichtungsindikators ist, mittels wenigstens einer Torsionswinkelerfassungseinheit ein Torsionswinkel des Rotorblatts erfasst wird, um welchen die Profilsehnenrichtungsindikator-Richtung relativ zu einer Profilsehnenrichtungsindikator-Referenzrichtung verdreht ist, mittels einer Blattwurzelwinkelerfassungseinheit ein Blattwurzelwinkel erfasst wird, um welchen die Blattwurzel relativ zu einer Blattwurzelreferenzlage um die Blattlängsachse verdreht ist, und mittels einer Auswerteeinheit auf Basis des Torsionswinkels und des Blattwurzelwinkels ein Pitch-Winkel des Rotorblatts am Ort des Profilsehnenrichtungsindikators ermittelt wird, wobei das Rotorblatt oder wenigstens ein mit dem Profilsehnenrichtungsindikator fest verbundenes Rotorblattteil des Rotorblatts vor seinem Verbinden mit dem Profilsehnenrichtungsindikator in einer Herstellform hergestellt wird.

Die US 2010/0121606 A1 offenbart ein Verfahren zum kontaktfreien Messen geometrischer Parameter eines Windturbinenblatts, wobei ein Messinstrument mit Blick auf das Blatt, einschließlich des Fußes und der Spitze des Blatts, angeordnet wird, der Winkel und der Abstand des Messinstruments zu einer Anzahl von Referenzmarkierungen auf dem Blatt durch das Messinstrument gemessen werden, der Winkel und der Abstand des Messinstruments zu einer Anzahl von Fuß-Referenzpunkten auf dem Blatt durch das Messinstrument gemessen werden, der Winkel zwischen einer Linie durch die Referenzmarkierungen und einer Linie durch die Fuß-Referenzpunkte bestimmt wird, wodurch die Krümmung des Blatts bestimmt wird, und die Verdrehung des Blatts mit der Verdrehung des Blatts wie konstruiert, verglichen wird, wodurch die Produktabweichung des Blatts bestimmt wird.

Ein Rotorblatt einer Windkraftanlage bildet eine schlanke Struktur mit einer Blattwurzel und Blattquerschnitten entlang einer Blattlängsachse. Der Abstand entlang der Blattlängsachse, von der Blattwurzel aus gemessen, wird dabei als Abstandslage bezeichnet. Jedem Blattquerschnitt ist eine Profilsehnenrichtung zugeordnet, die durch eine Linie repräsentiert wird, welche die Vorderkante des Blattprofils mit der Hinterkante des Blattprofils verbindet. Eine repräsentative Profilsehnenrichtung für das Rotorblatt ist als Profilsehnenrichtung in einer vorbestimmten Abstandslage definiert.

Eine Rotornabe ist drehstarr an einer Rotorwelle der Windkraftanlage befestigt, wobei die Rotorwelle relativ zu einem Maschinenträger dreht und einen an dem Maschinenträger befestigten elektrischen Generator antreibt. Die Drehbewegung der Rotorwelle und somit der Rotornabe definiert einen Hauptdrehgeschwindigkeitsvektor der Windkraftanlage. In großen Windkraftanlagen, die beispielsweise auch als Multi-Megawatt-Anlagen bezeichnet werden, ist jedes Rotorblatt an seiner Blattwurzel mittels eines Blattlagers drehbar an der Rotornabe montiert, um eine Drehbewegung des Rotorblatts relativ zu der Rotornabe um die Blattlängsachse an der Blattwurzel zu ermöglichen. Diese Drehbewegung ermöglicht es, den Anstellwinkel des Rotorblatts zu ändern. Das Ändern des Anstellwinkels ändert die am Rotorblatt angreifenden und/oder wirkenden Auftriebskräfte und Strömungswiderstände und somit auch die vom Rotorblatt auf die Rotornabe übertragenen Belastungen.

Die repräsentative Profilsehnenrichtung ist in der Praxis schwierig zu erkennen oder zu ermitteln, da die Sicht innerhalb des Rotorblatts durch Blattholme versperrt ist, sodass ein ungehinderter Sichtkontakt zwischen der Vorderkante und der Hinterkante des Blattquerschnitts verhindert ist. Zusätzlich ist die repräsentative Profilsehnenrichtung von der Rotornabe aus nicht sichtbar, wenn vom Inneren der Rotornabe in das Rotorblatt hineingeschaut wird oder wenn das Rotorblatt von außen betrachtet wird. Dementsprechend wird an dem Rotorblatt in der Nähe der Blattwurzel eine Blattmarkierung befestigt, die es ermöglicht, das Rotorblatt mit der korrekten Drehorientierung relativ zu der Rotornabe zu montieren, indem die Blattmarkierung in eine vorbestimmte Position relativ zu einer Nabenmarkierung gebracht wird, die an der Rotornabe vorgesehen ist (siehe z.B. WO 2010/017820 A2). Ein Pitch-Winkeldrehgeber wird dann dazu verwendet, nachfolgende Drehbewegungen des Rotorblatts bezüglich der Rotornabe zu messen.

Im Betrieb der Windkraftanlage treten mehrere Arten von Pitch-Winkeln auf. In jeder ausgewählten Abstandslage ist der wahre Pitch-Winkel der Winkel zwischen der lokalen Profilsehnenrichtung und dem Hauptdrehgeschwindigkeitsvektor. Da das Rotorblatt typischerweise mit einer vorbestimmten Verdrehung entlang der Blattlängsachse hergestellt wird, ist der wahre Pitch-Winkel nicht ein einzelner Wert, sondern vielmehr eine Funktion (Pitch-Winkelfunktion) der Abstandslage. Aktuelle Windkraftanlagen verwenden jedoch je Rotorblatt nur einen einzigen Wert für den Pitch-Winkel in ihren Steuerungsalgorithmen. Um die Pitch-Winkelfunktion auf einen einzigen Wert zu reduzieren, wird ein repräsentativer wahrer Pitch-Winkel für das Rotorblatt definiert, indem der wahre Pitch-Winkel in der vorbestimmten Abstandslage gemessen wird. Insbesondere ist der repräsentative wahre Pitch-Winkel als Winkel zwischen der repräsentativen Profilsehnenrichtung und dem Hauptdrehgeschwindigkeitsvektor definiert. Der repräsentative wahre Pitch-Winkel ist im Stand der Technik allerdings nicht verfügbar, sodass Windkraftanlagen in ihren Steuerungsalgorithmen derzeit nur den von dem Pitch-Winkeldrehgeber gelieferte Pitch-Winkel an der Blattwurzel (Blattwurzel-Pitch-Winkel) als repräsentativen Pitch-Winkel verwenden. Die Differenz zwischen dem Blattwurzel-Pitch-Winkel und dem repräsentativen wahren Pitch-Winkel definiert dabei einen Pitch-Winkel-Fehler.

Ein Pitch-Winkel-Fehler ist sowohl unerwünscht als auch potenziell schädlich für die Windkraftanlage. Ein gemeinsamer Pitch-Winkel-Fehler tritt auf, wenn alle Rotorblätter den gleichen Pitch-Winkel-Fehler aufweisen, was zu einer Verringerung der Windkraftanlageneffizienz führt. Nachteiliger ist jedoch der Fall, wenn die Rotorblätter einen unterschiedlichen Pitch-Winkel-Fehler aufweisen, was unsymmetrische Blattbelastungen und folglich zyklische Belastungen der Rotorwelle der Windkraftanlage verursacht, was zu einem Ermüdungsversagen führen kann.

Ein Pitch-Winkel-Fehler tritt in der Praxis entweder aufgrund inkorrekter Einstellungen des Pitch-Winkel-Drehgebers beim Hersteller oder aufgrund von Signal-Drift, Beschädigungen oder anderen Störungen des korrekten Betriebs des Pitch-Winkel-Drehgebers im praktischen Einsatz auf und schließt Fehler mit ein, die während der Wartung der Windkraftanlage verursacht werden. Zusätzliche Pitch-Winkel-Fehler, die allerdings nicht an der Blattwurzel auftreten, treten aufgrund von Torsion des Rotorblatts über seine Längserstreckung auf, wobei die Torsion des Rotorblatts sowohl die Folge von durch Windkräfte hervorgerufenen Torsionsmomenten als auch die Folge einer strukturellen Kopplung zwischen einer Deformation des Rotorblatts in Blattlängsrichtung (z.B. Deformation der Blattflächen und/oder der Blattkanten) und Torsionsdeformation sein kann.

Es besteht somit der Wunsch, eine Möglichkeit zu schaffen, den Pitch-Winkel-Fehler im praktischen Einsatz einer Windkraftanlage, insbesondere kontinuierlich, unterbrechungsfrei und automatisch, messen zu können. Nach dem aktuellen Stand der Technik wird jedoch eine teure und langsame Methode zum Abschätzen des Pitch-Winkel-Fehlers im praktischen Einsatz eingesetzt. Diese Methode ist mit dem Einsatz von Menschen am Ort der Windkraftanlage und zusätzlich mit dem Abschalten der Windkraftanlage für eine längere Zeitdauer verbunden.

Ferner besteht der Wunsch, eine Möglichkeit zur, insbesondere zeitlich kontinuierlichen, Messung des wahren Pitch-Winkels eines Rotorblatts während des Windkraftanlagenbetriebs zu schaffen, ohne dass ein Anhalten der Windkraftanlage oder ein manueller Eingriff erforderlich ist. Ferner sollen Asymmetrien im Pitch-Winkel in einem frühen Entstehungsstadium erfasst werden können, bevor signifikante, schädliche, zyklische Belastungen auftreten.

Zusätzlich besteht der Wunsch, mehrere Messungen des wahren Pitch-Winkels entlang der Längserstreckung des Rotorblatts durchführen zu können, um die Torsionsdeformation nachvollziehen und einen genaueren Pitch-Winkel bestimmen zu können, der repräsentativ für den aerodynamischen Zustand entlang des gesamten Rotorblattes ist.

Ein erstes Ziel liegt somit insbesondere darin, eine Möglichkeit zu schaffen, die Profilsehnen-Linie eines Blattquerschnitts in einer vorbestimmten Abstandslage akkurat beschreiben zu können, und zwar konsistent über alle Rotorblätter desselben Typs.

Ein zweites Ziel liegt insbesondere darin, den wahren Pitch-Winkel zwischen der Profilsehen-Linie an einer vorgewählten Abstandslage und dem Hauptdrehgeschwindigkeitsvektor messen zu können, ohne einen Pitch-Winkeldrehgeber an der Rotornabe verwenden zu müssen, sodass die Messung des wahren Pitch-Winkels frei von Fehlern ist, die von dem Pitch-Winkeldrehgeber hervorgerufen werden.

Ein drittes Ziel liegt insbesondere darin, den wahren Pitch-Winkel im Wesentlichen gleichzeitig in unterschiedlichen Abstandslagen messen zu können.

Ein viertes Ziel liegt insbesondere darin, den wahren Pitch-Winkel in einer vorbestimmten Abstandslage an ein Steuerungssystem der Windkraftanlage melden zu können, sodass präzisere Windkraftanlage-Steuerungsalgorithmen ermöglicht werden.

Der Erfindung liegt die Aufgabe zugrunde, einen Pitch-Winkel des Rotorblatts genauer bestimmen zu können.

Diese Aufgabe wird erfindungsgemäß durch ein Verfahren nach Anspruch 1 gelöst. Bevorzugte Weiterbildungen des Verfahrens sind in den Unteransprüchen und in der nachfolgenden Beschreibung gegeben.

Das eingangs genannte Verfahren zur Pitch-Winkelmessung und/oder zum Aufbau eines Messsystems zur Pitch-Winkelmessung an einem eine Blattwurzel aufweisenden und sich in Richtung einer Blattlängsachse erstreckenden Rotorblatt einer Windkraftanlage, welches mit seiner Blattwurzel an einer um eine Rotorachse drehenden oder drehbaren Rotornabe der Windkraftanlage um die Blattlängsachse drehbar gelagert ist oder wird, wobei
- im Abstand zur Blattwurzel ein oder wenigstens ein Profilsehnenrichtungsindikator fest mit dem Rotorblatt verbunden wird, der eine Profilsehnenrichtungsindikator-Richtung definiert, die indikativ für eine Richtung einer Profilsehne des Rotorblatts am Ort des Profilsehnenrichtungsindikators ist,
- mittels einer oder wenigstens einer Torsionswinkelerfassungseinheit ein Torsionswinkel des Rotorblatts erfasst wird, um welchen die Profilsehnenrichtungsindikator-Richtung relativ zu einer Profilsehnenrichtungsindikator-Referenzrichtung verdreht ist,
- mittels einer oder wenigstens einer Blattwurzelwinkelerfassungseinheit ein Blattwurzelwinkel erfasst wird, um welchen die Blattwurzel relativ zu einer Blattwurzelreferenzlage um die Blattlängsachse verdreht ist, und
- mittels einer oder wenigstens einer Auswerteeinheit auf Basis des Torsionswinkels und des Blattwurzelwinkels ein Pitch-Winkel des Rotorblatts am Ort des Profilsehnenrichtungsindikators ermittelt wird, wobei
- das Rotorblatt oder wenigstens ein mit dem Profilsehnenrichtungsindikator fest verbundenes Rotorblattteil des Rotorblatts, insbesondere vor seinem Verbinden mit dem Profilsehnenrichtungsindikator, in einer oder wenigstens einer Herstellform hergestellt wird,
   wird erfindungsgemäß derart weitergebildet, dass
- während das, insbesondere hergestellte, Rotorblatt oder Rotorblattteil, vorzugsweise noch, in der Herstellform einliegt, der Profilsehnenrichtungsindikator in einer, vorzugsweise relativ zu der Herstellform definierten, Lage fest mit dem Rotorblatt oder Rotorblattteil verbunden wird, die insbesondere relativ zu der Herstellform definiert wird.

In der Herstellform befindet sich das Rotorblatt oder Rotorblattteil in einem definierten Zustand, der auch für jedes andere in der Form hergestellte Rotorblatt oder Rotorblattteil reproduzierbar ist. Ferner bildet dieser Zustand einen lastfreien Zustand des Rotorblatts oder Rotorblattteils, der in praktischer Hinsicht nicht mehr zu erreichen ist, wenn das Rotorblatt oder Rotorblattteil einmal der Herstellform entnommen worden ist, da das Rotorblatt oder Rotorblattteil in der Regel bereits aufgrund seines Eigengewichts außerhalb der Herstellform eine Verformung erfährt. Die Herstellform bildet somit ein Bezugssystem, in welchem das bereits hergestellte aber noch in der Herstellform einliegende Rotorblatt oder Rotorblattteil in Konstruktionslage vorliegt. Da ferner das Rotorblatt oder Rotorblattteil, nachdem es der Herstellform entnommen worden ist, im Bereich der Blattwurzel praktisch keine oder eine lediglich geringe oder vernachlässigbare Verformung erfährt, auch im praktischen Einsatz, kann über die Blattwurzel des Rotorblatts ein eindeutiger Bezug zwischen dem Rotorblatt und der Herstellform geschaffen werden.

Dadurch, dass die Lage, in welcher der Profilsehnenrichtungsindikator fest mit dem in der Herstellform einliegenden Rotorblatt oder Rotorblattteil verbunden wird, relativ zu der Herstellform definiert wird, wird insbesondere auch die Profilsehnenrichtungsindikator-Referenzrichtung definiert und/oder bestimmt. Diese Definition und/oder Bestimmung der Profilsehnenrichtungsindikator-Referenzrichtung erfolgt somit insbesondere im lastfreien Zustand des Rotorblatts, sodass der Torsionswinkel mit einer größeren Genauigkeit als bei herkömmlichen Lösungen erfassbar ist. Somit ist aber auch der Pitch-Winkel mit einer größeren Genauigkeit ermittelbar. Ein Pitch-Winkel-Fehler ist daher vermeidbar oder zumindest deutlich reduzierbar.

Die Drehbewegung der Rotornabe um die Rotorachse definiert insbesondere einen Hauptdrehgeschwindigkeitsvektor und/oder die Drehbewegung der Rotornabe um die Rotorachse ist insbesondere durch den oder einen Hauptdrehgeschwindigkeitsvektor definiert und/oder charakterisiert.

Bevorzugt wird das Rotorblatt oder Rotorblattteil nach seiner Herstellung der Herstellform entnommen und/oder von dieser separiert. Vorteilhaft wird der Profilsehnenrichtungsindikator fest mit dem Rotorblatt oder Rotorblattteil verbunden, bevor das, insbesondere hergestellte, Rotorblatt oder Rotorblattteil der Herstellform entnommen und/oder von dieser separiert wird.

Gemäß einer Weiterbildung wird das Rotorblatt oder Rotorblattteil aus einem Rotorblattwerkstoff hergestellt, der ein aushärtbares Material umfasst. Bevorzugt wird der Profilsehnenrichtungsindikator nach dem Aushärten des aushärtbaren Materials fest mit dem Rotorblatt oder dem Rotorblattteil verbunden. Das aushärtbare Material ist insbesondere ein Kunststoff und/oder Kunstharz, wie z.B. Epoxid. Bevorzugt wird die Profilsehnenrichtungsindikator-Referenzrichtung nach dem Aushärten des aushärtbaren Materials definiert und/oder bestimmt und/oder ermittelt.

Bevorzugt ist oder wird ein oder wenigstens ein Profilsehnenrichtungsindikatorhalter vorgesehen, mittels welchem der Profilsehnenrichtungsindikator gehalten wird. Beispielsweise umfasst der Profilsehnenrichtungsindikator den oder den wenigstens einen Profilsehnenrichtungsindikatorhalter. Vorteilhaft wird der Profilsehnenrichtungsindikatorhalter, bevorzugt in der oder einer, vorzugsweise relativ zu der Herstellform definierten, Lage, die insbesondere relativ zu der Herstellform definiert wird, fest mit dem Rotorblatt oder Rotorblattteil verbunden, während das, insbesondere hergestellte, Rotorblatt oder Rotorblattteil, vorzugsweise noch, in der Herstellform einliegt. Vorteilhaft wird nach dem Verbinden des Profilsehnenrichtungsindikatorhalters mit dem Rotorblatt oder Rotorblattteil der Profilsehnenrichtungsindikator an dem Profilsehnenrichtungsindikatorhalter befestigt, bevorzugt während das, insbesondere hergestellte, Rotorblatt oder Rotorblattteil, vorzugsweise noch, in der Herstellform einliegt.

Erfindungsgemäß wird die Lage des Profilsehnenrichtungsindikators relativ zu der Herstellform mittels eines oder wenigstens eines Werkzeugs definiert, welches relativ zu der Herstellform ausgerichtet wird. Somit kann die Lage, in welcher der Profilsehnenrichtungsindikator relativ zu der Herstellform fest mit dem Rotorblatt oder Rotorblattteil verbunden wird, mit größerer Genauigkeit bestimmt werden, was auch zu einer größeren Genauigkeit des Pitch-Winkels führt. Insbesondere ist somit der Pitch-Winkel mit einer Genauigkeit von 0,1° oder 0,2° erzielbar und/oder ermittelbar.

Bevorzugt wird die Herstellform mit mehreren Herstellform-Markierungen versehen, an welchen das Werkzeug angesetzt wird und/oder mittels welchen das Werkzeug relativ zu der Herstellform ausgerichtet wird. Hierdurch wird das Ausrichten des Werkzeugs relativ zu der Herstellform erleichtert und eine einfache Möglichkeit zur Reproduzierbarkeit der Ausrichtung geschaffen.

Gemäß einer ersten Variante ist das Werkzeug ein Montagewerkzeug, wobei die Herstellform-Markierungen Montagemarkierungen umfassen, an welchen das Montagewerkzeug angesetzt wird und/oder mittels welchen das Montagewerkzeug relativ zu der Herstellform ausgerichtet wird. Bevorzugt wird mittels des Montagewerkzeugs der Profilsehnenrichtungsindikator oder der oder wenigstens ein Profilsehnenrichtungsindikatorhalter zum Halten des Profilsehnenrichtungsindikators relativ zu der Herstellform positioniert, wonach insbesondere der Profilsehnenrichtungsindikator oder Profilsehnenrichtungsindikatorhalter fest mit dem Rotorblatt oder Rotorblattteil verbunden wird.

Gemäß einer zweiten Variante ist das Werkzeug ein Messwerkzeug, wobei die Herstellform-Markierungen Messmarkierungen umfassen, an welchen das Messwerkzeug angesetzt wird und/oder mittels welchen das Messwerkzeug relativ zu der Herstellform ausgerichtet wird. Bevorzugt wird mittels des Messwerkzeugs die Lage des, insbesondere bereits mit dem Rotorblatt oder Rotorblattteil fest verbundenen, Profilsehnenrichtungsindikators relativ zu der Herstellform, vorzugsweise optisch, erfasst und/oder bestimmt und somit insbesondere definiert.

Bevorzugt wird die Herstellform mit den oder mehreren Montagemarkierungen versehen, an welchen das oder ein oder wenigstens ein Montagewerkzeug angesetzt wird und/oder mittels welchen das oder ein oder wenigstens ein Montagewerkzeug relativ zu der Herstellform ausgerichtet wird. Insbesondere wird mittels des Montagewerkzeugs der Profilsehnenrichtungsindikator oder der oder wenigstens ein Profilsehnenrichtungsindikatorhalter zum Halten des Profilsehnenrichtungsindikators relativ zu der Herstellform positioniert, wonach insbesondere der Profilsehnenrichtungsindikator oder Profilsehnenrichtungsindikatorhalter fest mit dem Rotorblatt oder Rotorblattteil verbunden wird.

Vorteilhaft wird die Herstellform mit den oder mehreren Messmarkierungen versehen, an welchen das oder ein oder wenigstens ein Messwerkzeug angesetzt wird und/oder mittels welchen das oder ein oder wenigstens ein Messwerkzeug relativ zu der Herstellform ausgerichtet wird. Bevorzugt wird mittels des Messwerkzeugs die Lage des, insbesondere bereits mit dem Rotorblatt oder Rotorblattteil fest verbundenen, Profilsehnenrichtungsindikators relativ zu der Herstellform, vorzugsweise optisch, erfasst und/oder bestimmt und somit insbesondere definiert.

Das Messwerkzeug weist bevorzugt einen oder wenigstens einen optischen Referenzsensor auf, mittels welchem die Lage des, insbesondere bereits mit dem Rotorblatt oder Rotorblattteil fest verbundenen, Profilsehnenrichtungsindikators relativ zu der Herstellform optisch erfasst und/oder bestimmt wird. Der Referenzsensor ist oder umfasst z.B. eine Kamera, insbesondere eine Digitalkamera.

Das Messwerkzeug kann auch zum Kalibrieren eines Profilsehnenrichtungsindikators eingesetzt werden, der z.B. mit Hilfe des Montagewerkzeugs positioniert und/oder montiert worden ist. Gemäß einer Weiterbildung wird mittels des Messwerkzeugs die Lage des, insbesondere bereits mit dem Rotorblatt oder Rotorblattteil fest verbundenen, Profilsehnenrichtungsindikators relativ zu der Herstellform erfasst und/oder bestimmt und vorzugsweise somit der Profilsehnenrichtungsindikator kalibriert. Bevorzugt wird durch die Kalibrierung ein Profilsehnenrichtungslageindikator gebildet, der die Lage des Profilsehnenrichtungsindikators, insbesondere bezüglich der Herstellform und/oder der Blattwurzel, definiert.

Vorzugsweise umfassen die Herstellform-Markierungen und/oder die Montagemarkierungen und/oder die Messmarkierung Eingriffselemente, die, vorzugsweise zum Ausrichten des Werkzeugs und/oder des Montagewerkzeugs und/oder des Messwerkzeugs, mit an dem Werkzeug und/oder dem Montagewerkzeug und/oder dem Messwerkzeug vorgesehenen Gegen-Eingriffselementen, insbesondere formschlüssig, in Eingriff gebracht werden oder werden können. Bei den Eingriffselementen handelt es sich z.B. um Stifte oder Löcher. Ferner handelt es sich bei den Gegen-Eingriffselementen z.B. um Löcher oder Stifte. Dabei kann vorteilhaft jeweils ein Stift des Eingriffselements oder Gegen-Eingriffselements mit einem Loch des Gegen-Eingriffselements oder Eingriffselements in Eingriff gebracht werden.

Gemäß einer Ausgestaltung wird die Profilsehnenrichtungsindikator-Referenzrichtung definiert und/oder bestimmt und/oder ermittelt, während das Rotorblatt oder Rotorblattteil in der Herstellform einliegt. Bevorzugt wird die Profilsehnenrichtungsindikator-Referenzrichtung relativ zu der Herstellform definiert und/oder bestimmt und/oder ermittelt. Somit wird insbesondere eine eindeutige Lagebeziehung zwischen der Profilsehnenrichtungsindikator-Referenzrichtung und der Blattwurzel geschaffen. Insbesondere ist die Profilsehnenrichtungsindikator-Referenzrichtung indikativ für die Profilsehnenrichtungsindikator-Richtung in einem nicht tordierten Zustand des Rotorblatts. Bevorzugt entspricht die Profilsehnenrichtungsindikator-Referenzrichtung der Profilsehnenrichtungsindikator-Richtung im unbelasteten Zustand des Rotorblatts oder Rotorblattteils. Vorteilhaft entspricht die Profilsehnenrichtungsindikator-Referenzrichtung der Profilsehnenrichtungsindikator-Richtung, wenn der Profilsehnenrichtungsindikator fest mit dem in der Herstellform einliegenden Rotorblatt oder Rotorblattteil verbunden ist.

Das Rotorblatt wird z.B. als einteiliges Rotorblatt und/oder in Form einer monolithischen Einheit hergestellt. Gemäß einer Alternative wird das Rotorblatt aus zwei Rotorblatthalbschalen zusammengesetzt, von denen eine oder wenigstens eine insbesondere das Rotorblattteil bildet.

Gemäß einer Weiterbildung wird der Profilsehnenrichtungsindikator mit wenigstens zwei entlang der Profilsehnenrichtungsindikator-Richtung nebeneinander angeordneten Profilsehnenrichtungsindikator-Markierungen versehen. Bevorzugt weist die Torsionswinkelerfassungseinheit einen oder wenigstens einen, insbesondere optischen, Sensor auf, mittels welchem die Profilsehnenrichtungsindikator-Markierungen, insbesondere optisch, erfasst werden. Der optische Sensor ist oder umfasst z.B. eine Kamera, insbesondere eine Digitalkamera. Bevorzugt sind die Profilsehnenrichtungsindikator-Markierungen als Reflektoren oder jeweils als Reflektor ausgebildet. Vorzugseise umfasst die Torsionswinkelerfassungseinheit eine Beleuchtungseinheit, mittels welcher die Profilsehnenrichtungsindikator-Markierungen beleuchtet werden oder werden können.

Bevorzugt wird der oder der wenigstens eine Profilsehnenrichtungsindikator der Torsionswinkelerfassungseinheit zugerechnet. Insbesondere umfasst die Torsionswinkelerfassungseinheit den oder den wenigstens einen Profilsehnenrichtungsindikator.

Gemäß einer Ausgestaltung bildet oder umfasst der Profilsehnenrichtungsindikator und/oder die Torsionswinkelerfassungseinheit eine oder wenigstens eine Messeinheit, die insbesondere fest mit dem Profilsehnenrichtungsindikator verbunden ist oder diesen bildet. Die Messeinheit ist oder umfasst insbesondere eine inertiale Messeinheit. Bevorzugt ist oder umfasst die Messeinheit einen oder wenigstens einen, insbesondere mehrachsigen, vorzugsweise dreiachsigen, Beschleunigungssensor und/oder gyroskopischen Sensor. Insbesondere sind diese Achsen linear unabhängig voneinander und/oder nicht komplanar. Vorzugsweise verlaufen diese Achsen senkrecht zueinander. Beispielsweise umfasst die Messeinheit ein oder wenigstens ein Gyroskop. Insbesondere ist mittels der Messeinheit der Torsionswinkel oder ein repräsentativer Torsionswinkel erfassbar, der indikativ für den Torsionswinkel ist.

Beispielsweise ist oder wird die Torsionswinkelerfassungseinheit am Ort des Profilsehnenrichtungsindikators angeordnet und/oder am Ort des Profilsehnenrichtungsindikators fest mit dem Rotorblatt verbunden. Bevorzugt ist oder wird die Torsionswinkelerfassungseinheit aber an oder im Bereich der Blattwurzel fest mit dem Rotorblatt verbunden. In diesem Fall vereinfacht sich insbesondere die mechanische und/oder elektrische Installation der Torsionswinkelerfassungseinheit.

Gemäß einer Weiterbildung wird ein blattwurzelfestes Bezugssystem definiert und vorzugsweise der Blattwurzel, insbesondere fest, zugeordnet. Bei dem blattwurzelfesten Bezugssystem handelt es sich insbesondere um ein blattwurzelfestes Koordinatensystem. Bevorzugt umfasst das blattwurzelfeste Bezugssystem zwei oder drei Achsen, die insbesondere linear unabhängig voneinander und/oder nicht komplanar sind. Vorzugsweise verlaufen die Achsen des blattwurzelfesten Bezugssystems senkrecht zueinander. Das blattwurzelfeste Bezugssystem wird insbesondere im unbelasteten Zustand des Rotorblatts definiert. Beispielsweise wird das blattwurzelfeste Bezugssystem definiert, wenn das Rotorblatt oder Rotorblattteil in der oder der wenigstens einen Herstellform einliegt. Bevorzugt wird das blattwurzelfeste Bezugssystem relativ zu der oder der wenigstens einen Herstellform definiert.

Insbesondere ist oder wird die Blattwurzelreferenzlage in dem oder einem blattwurzelfesten Bezugssystem definiert. Ferner ist oder wird die Profilsehnenrichtungsindikator-Referenzrichtung bevorzugt in dem oder einem blattwurzelfesten Bezugssystem definiert. Vorzugsweise wird der Torsionswinkel in dem oder einem blattwurzelfesten Bezugssystem erfasst. Vorteilhaft wird der Blattwurzelwinkel in dem oder einem blattwurzelfesten Bezugssystem erfasst.

Gemäß einer Ausgestaltung sind oder werden die Blattwurzelreferenzlage und die Profilsehnenrichtungsindikator-Referenzrichtung relativ zueinander festgelegt, vorzugsweise in oder bezüglich des oder eines blattwurzelfesten Bezugssystem. Somit ist es insbesondere möglich, den Torsionswinkel und den Blattwurzelwinkel in eine Beziehung zueinander zu setzen, die das Ermitteln und/oder Bestimmen des Pitch-Winkels erlaubt.

Gemäß einer Weiterbildung ist oder wird die Blattwurzelwinkelerfassungseinheit an oder im Bereich der Blattwurzel fest mit dem Rotorblatt verbunden. Vorzugsweise ist die Blattwurzelwinkelerfassungseinheit relativ zu der Torsionswinkelerfassungseinheit ortsfest.

Die Blattwurzelwinkelerfassungseinheit ist oder umfasst bevorzugt eine inertiale Messeinheit. Insbesondere ist oder umfasst die Blattwurzelwinkelerfassungseinheit einen oder wenigstens einen, insbesondere mehrachsigen, vorzugsweise dreiachsigen, Beschleunigungssensor und/oder gyroskopischen Sensor.

Beispielsweise umfasst die Blattwurzelwinkelerfassungseinheit ein oder wenigstens ein Gyroskop. Insbesondere ist die Blattwurzelreferenzlage indikativ für einen nicht verdrehten Zustand der Blattwurzel.

Das Messsystem zur Pitch-Winkelmessung umfasst bevorzugt den Profilsehnenrichtungsindikator, die Torsionswinkelerfassungseinheit, die Blattwurzelwinkelerfassungseinheit und die Auswerteeinheit. Bevorzugt sind die Torsionswinkelerfassungseinheit und die Blattwurzelwinkelerfassungseinheit, insbesondere elektrisch und/oder optisch und/oder per Funk, mit der Auswerteeinheit verbunden. Bevorzugt wirkt die Torsionswinkelerfassungseinheit mit dem Profilsehnenrichtungsindikator zusammen.

Die Auswerteeinheit ist oder umfasst bevorzugt eine Recheneinheit. Bei der Recheneinheit handelt es sich insbesondere um eine elektronische Recheneinheit. Vorteilhaft umfasst die Auswerteeinheit und/oder die Recheneinheit einen oder wenigstens einen Digitalrechner, beispielsweise einen oder wenigstens einen Mikroprozessor und/oder digitalen Signalprozessor und/oder Mikrocontroller. Vorzugsweise umfasst die Auswerteeinheit eine Speichereinheit. Bei der Speichereinheit handelt es sich insbesondere um eine elektronische Speichereinheit. Vorteilhaft umfasst die Auswerteeinheit und/oder die Speichereinheit einen Speicher mit wahlfreiem Zugriff (RAM) und/oder einen Festwertspeicher (ROM) und/oder einen anderen elektronischen Speicher.

Die Erfindung betrifft ferner ein Verfahren zur Pitch-Winkelmessung an einem eine Blattwurzel aufweisenden und sich in Richtung einer Blattlängsachse erstreckenden Rotorblatt einer Windkraftanlage, welches mit seiner Blattwurzel an einer um eine Rotorachse drehenden oder drehbaren Rotornabe der Windkraftanlage um die Blattlängsachse drehbar gelagert ist oder wird, wobei
- im Abstand zur Blattwurzel ein oder wenigstens ein Profilsehnenrichtungsindikator fest mit dem Rotorblatt verbunden wird, der eine Profilsehnenrichtungsindikator-Richtung definiert, die indikativ für eine Richtung einer Profilsehne des Rotorblatts am Ort des Profilsehnenrichtungsindikators ist,
- ein Torsionswinkel des Rotorblatts erfasst wird, um welchen die Profilsehnenrichtungsindikator-Richtung relativ zu einer Profilsehnenrichtungsindikator-Referenzrichtung verdreht ist,
- ein Blattwurzelwinkel erfasst wird, um welchen die Blattwurzel relativ zu einer Blattwurzelreferenzlage um die Blattlängsachse verdreht ist, und
- auf Basis des Torsionswinkels und des Blattwurzelwinkels ein Pitch-Winkel des Rotorblatts am Ort des Profilsehnenrichtungsindikators ermittelt wird, wobei
- das Rotorblatt oder wenigstens ein mit dem Profilsehnenrichtungsindikator fest verbundenes Rotorblattteil des Rotorblatts, insbesondere vor seinem Verbinden mit dem Profilsehnenrichtungsindikator, in einer oder wenigstens einer Herstellform hergestellt wird, und wobei
- während das, insbesondere hergestellte, Rotorblatt oder Rotorblattteil, vorzugsweise noch, in der Herstellform einliegt, der Profilsehnenrichtungsindikator in einer, vorzugsweise relativ zu der Herstellform definierten, Lage fest mit dem Rotorblatt oder Rotorblattteil verbunden wird, die insbesondere relativ zu der Herstellform definiert wird.

Dieses Verfahren kann gemäß allen im Zusammenhang mit dem vorherigen Verfahren erläuterten Ausgestaltungen weitergebildet sein.

Die Erfindung wird nachfolgend anhand bevorzugter Ausführungsformen unter Bezugnahme auf die Zeichnung beschrieben. In der Zeichnung zeigen:
Fig. 1 eine perspektivische Teildarstellung einer Windkraftanlage,
Fig. 2 in schematischer Darstellung einen Querschnitt eines Rotorblatts der Windkraftanlage,
Fig. 3 in schematischer Darstellung eine Innenansicht des Rotorblatts von dessen Blattwurzel aus gesehen,
Fig. 4 eine schematische Seitenansicht eines Rotorblatts gemäß einer Variante mit einem Beschleunigungssensor,
Fig. 5 eine schematische, perspektivische Ansicht einer Rotorblatthalbschale des Rotorblatts und einer Herstellform zur Herstellung der Rotorblatthalbschale,
Fig. 6 eine schematische, perspektivische Ansicht der in der Herstellform einliegenden Rotorblatthalbschale und eines mechanischen Referenzsystems gemäß einer ersten Ausführungsform,
Fig. 7 eine schematische Schnittansicht der Herstellform und der Rotorblatthalbschale, wobei ein erster Montageschritt zur Montage von Reflektoren dargestellt ist,
Fig. 8 eine schematische Schnittansicht der Herstellform und der Rotorblatthalbschale, wobei ein zweiter Montageschritt zur Montage der Reflektoren dargestellt ist,
Fig. 9 eine schematische Schnittansicht der Herstellform und der Rotorblatthalbschale, wobei ein dritter Montageschritt zur Montage der Reflektoren dargestellt ist,
Fig. 10 eine schematische Schnittansicht der Herstellform und der Rotorblatthalbschale, wobei ein vierter Montageschritt zur Montage der Reflektoren dargestellt ist,
Fig. 11 eine schematische Schnittansicht der Herstellform und der Rotorblatthalbschale, auf die eine andere Rotorblatthalbschale aufgesetzt wird,
Fig. 12 eine schematische Stirnansicht eines Rotorblatts und einer Herstellform zur Herstellung des oder eines Rotorblatts nach einem alternativen Herstellungsverfahren und
Fig. 13 eine schematische Stirnansicht des Rotorblatts und der Herstellform nach Fig. 12, wobei ein Hilfsrahmen gemäß einer zweiten Ausführungsform auf die blattwurzelseitige Stirnseite der Herstellform montiert ist.

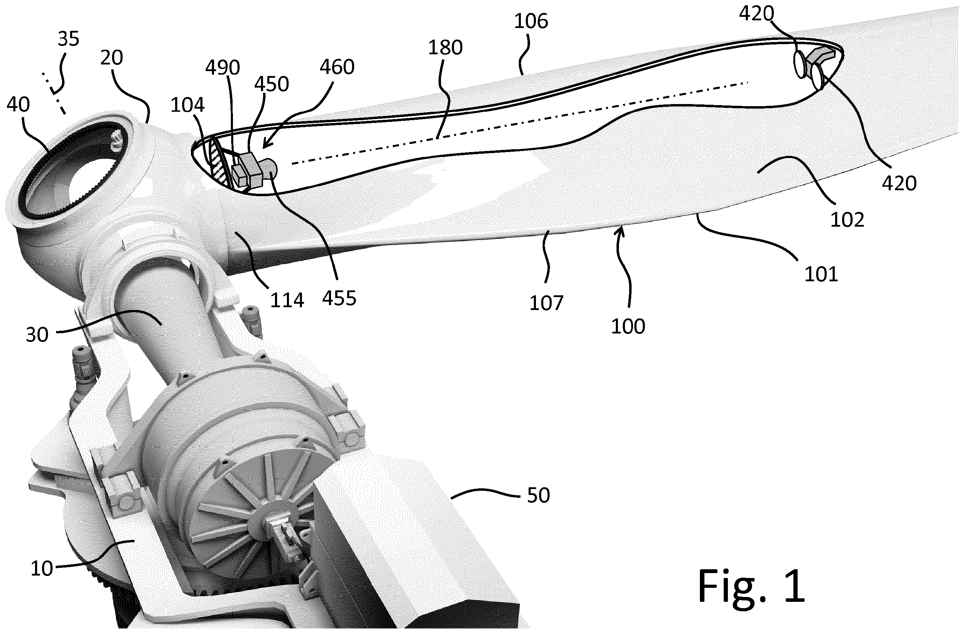

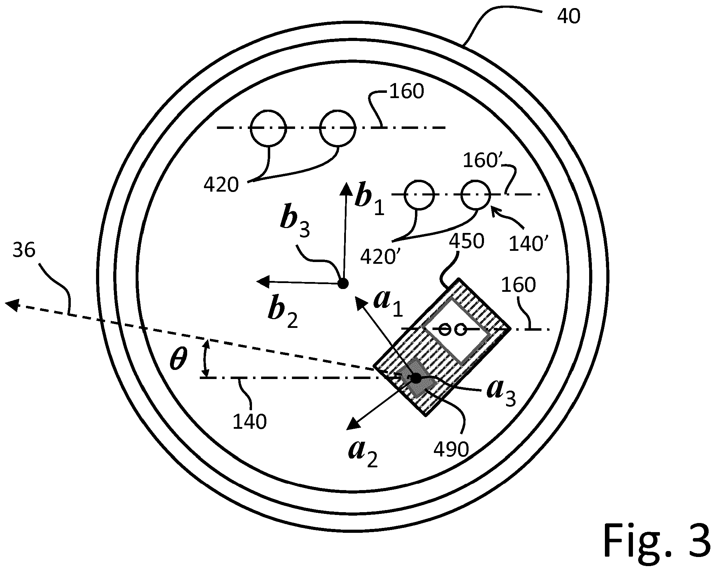

Aus Fig. 1 ist eine perspektivische Teildarstellung einer Windkraftanlage ersichtlich, die eine an einem Maschinenträger 10 um eine Rotorachse 35 drehbar gelagerte Rotorwelle 30 aufweist. Eine Rotornabe 20 ist drehstarr mit der Rotorwelle 30 verbunden, die um die Rotorachse 35 relativ zu dem Maschinenträger 10 dreht und einen an diesem befestigten elektrischen Generator 50 antreibt. Die Drehbewegung der Rotorwelle 30 und/oder der Rotornabe 20 definiert einen Hauptdrehgeschwindigkeitsvektor 36 (siehe Fig. 3) der Windkraftanlage und/oder die Drehbewegung der Rotorwelle 30 und/oder der Rotornabe 20 ist durch den oder einen Hauptdrehgeschwindigkeitsvektor 36 definiert. Der Hauptdrehgeschwindigkeitsvektor 36 charakterisiert somit insbesondere die Drehbewegung der Rotorwelle 30 und/oder der Rotornabe 20 um die Rotorachse 35. Einem Rotorblatt 100 ist eine Blattlängsachse 180 zugeordnet, entlang welcher sich das Rotorblatt 100 erstreckt. Das Rotorblatt 100 weist eine Blattwurzel 114 auf und ist mit dieser mittels eines Blattlagers 40 drehbar an der Rotornabe 20 gelagert, um eine Drehbewegung des Rotorblatts 100 relativ zu der Rotornabe 20 um die Längsachse 180 an der Blattwurzel 114 zu ermöglichen. Diese Drehbewegung ermöglicht es, den Anstellwinkel des Rotorblatts 100 zu ändern. Das Ändern des Anstellwinkels ändert die am Rotorblatt 100 angreifenden und/oder wirkenden Auftriebskräfte und Strömungswiderstände und somit die von dem Rotorblatt 100 auf die Rotornabe 20 übertragenen Belastungen. Das Rotorblatt 100 weist eine Vorderkante 106 und eine Hinterkante 107 auf und ist aus einer oberen Rotorblattblatthalbschale 102 und einer unteren Rotorblattblatthalbschale 101 zusammengesetzt, wobei die Rotorblattblatthalbschalen 101 und 102 an den Kanten 106 und 107 fest miteinander verbunden sind. Ein von der Blattwurzel 114 aus gemessener Abstand entlang der Blattlängsachse 180 wird insbesondere als Abstandslage bezeichnet. Bevorzugt wird ein Ort oder eine Lage, der oder die entlang der Blattlängsachse 180 einen, insbesondere vorbestimmten, Abstand zur Blattwurzel 114 aufweist, als Abstandslage bezeichnet.

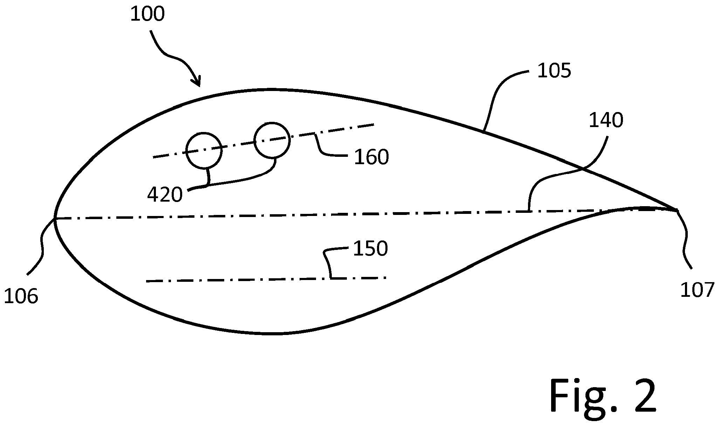

Aus Fig. 2 ist ein Blattquerschnitt (Blattprofil) 105 des Rotorblatts 100 ersichtlich, wobei dem Blattquerschnitt 105 eine Profilsehne zugeordnet ist, die durch eine, insbesondere gerade, Linie (Profilsehnen-Linie) definiert ist, welche sich von der Vorderkante 106 des Blattprofils bis zur Hinterkante 107 des Blattprofils erstreckt. Die Profilsehne weist eine Profilsehnenrichtung auf, die durch eine, insbesondere gerade, Linie oder Gerade definiert ist, welche die Vorderkante 106 des Blattprofils mit der Hinterkante 107 des Blattprofils verbindet und/oder durch die Vorderkante 106 des Blattprofils und die Hinterkante 107 des Blattprofils verläuft. Die Profilsehnenrichtung charakterisiert insbesondere die Richtung der Profilsehen-Linie. Da sich das Blattprofil 105 des Rotorblatts 100 entlang der Längsachse 180 ändert, ändert sich auch die Profilsehnenrichtung entlang der Blattlängsachse 180. Jeder Blattquerschnitt definiert eine somit seine eigene Profilsehnenrichtung. Eine erste Profilsehnenrichtung 140 für das Rotorblatt 100 ist als Profilsehnenrichtung an einer ersten vorbestimmten Abstandslage definiert.

### Teil 1: Physikalische Messung des Pitch-Winkels

Fig. 3 zeigt in schematischer Darstellung eine Innenansicht des Rotorblatts 100 von dessen Blattwurzel 114 aus gesehen. Es wird ein vorgewähltes Blattkoordinatensystem {b1, b2, b3} definiert und der Blattwurzel 114 fest zugeordnet, sodass das Blattkoordinatensystem {b1, b2, b3} ein blattwurzelfestes Bezugssystem bildet. Ferner ist oder wird das Blattkoordinatensystem in Bezug auf die geometrische Konfiguration des Rotorblatts 100 eindeutig definiert, wenn das Rotorblatt 100 keiner Belastung ausgesetzt ist. Bevorzugt wird, ohne Beschränkung der Allgemeinheit, die b3-Achse, ausgehend von der Blattwurzel 114, entlang und/oder in Richtung der Blattlängsachse 180 orientiert. Die Achsen b1 und b2 spannen somit insbesondere eine Ebene auf, in welcher entweder die Blattwurzel 114 liegt oder näherungsweise liegt oder die indikativ für eine Ebene ist, in welcher die Blattwurzel 114 liegt oder näherungsweise liegt. Bevorzugt liegt der Ursprung des Blattkoordinatensystem {b1, b2, b3} auf der Blattlängsachse 180.

Ein Messsystem zur Ermittlung des oder eines Pitch-Winkels θ, der hier insbesondere ein wahrer Pitch-Winkel ist, umfasst eine Hauptmesseinheit 460, die eine Torsionswinkelerfassungseinheit 450 und eine Blattwurzelwinkelerfassungseinheit 490 in Form eines Gyroskops aufweist (siehe Fig. 1). Die Torsionswinkelerfassungseinheit 450 ist ein Mittel zum Messen des oder eines Winkelversatzes von wenigstens der ersten Profilsehnenrichtung 140 relativ zu dem vorgewählten Blattkoordinatensystem {b1, b2, b3}, welches relativ zur Blattwurzel 114 fest ist.

Das Gyroskop 490 ist in der Nähe des Blattlagers 40 im Bereich der Blattwurzel 114 des Rotorblatts 100 angeordnet, sodass das Gyroskop 490 im Wesentlichen keine Verschiebung oder Verdrehung relativ zu dem Blattlager 40 und folglich zu dem vorgewählten Blattkoordinatensystem {b1, b2, b3} erfährt, wenn das Rotorblatt 100 unter Belastung steht.

Das Gyroskop 490 definiert drei senkrechte Achsen {a1, a2, a3} (siehe Fig. 3) und misst die Projektionen des Hauptdrehgeschwindigkeitsvektors 36 auf diese Achsen {a1, a2, a3}. Ohne Beschränkung der Allgemeinheit wird die a3-Achse ausgehend von der Blattwurzel 114 entlang und/oder in Richtung der Blattlängsachse 180 orientiert. Ferner werden die a1-Achse und die a2-Achse in einer beliebigen aber vorbestimmten und bekannten Richtung orientiert. Da die Achsen {a1, a2, a3} zusammen mit dem Rotorblatt 100 drehen, wenn das Rotorblatt 100 eine Drehung um die Blattlängsachse 180 erfährt, der Hauptdrehgeschwindigkeitsvektor 36 sich aber bei dieser Drehung nicht mit dreht, erlauben die vorgenannten Projektionen dem Gyroskop 490 einen Gyro-Pitch-Winkel zu bestimmen, der indikativ für den Drehwinkel des Rotorblatts 100 um die Blattlängsachse 180 ist. Ein Verfahren zur Berechnung des Gyro-Pitch-Winkels eines Rotorblatts ist z.B. in der EP 2 896 827 A1 offenbart, die hiermit per Referenz eingebunden wird.

In einer bevorzugten Ausgestaltung umfasst die Torsionswinkelerfassungseinheit 450 eine insbesondere als Digitalkamera ausgebildete Kamera 455, die an der Rotorblattstruktur und/oder an dem Rotorblatt 100 an oder in der Nähe der Blattwurzel 114 befestigt ist. Vorzugsweise ist oder wird die Kamera 455 an einer Abschlussplatte 104 des Rotorblatts 100 angebracht. Weiterhin sind die Torsionswinkelerfassungseinheit 450 und das Gyroskop 490 starr miteinander verbunden, sodass die relative Ausrichtung der Torsionswinkelerfassungseinheit 450 in Bezug auf das Gyroskop 490 festgelegt und/oder konstant und/oder bekannt ist. Besonders bevorzugt ist das Gyroskop 490 starr innerhalb eines Gehäuses der Kamera 455 festgelegt und/oder eingebaut.

Die Kamera 455 ist in Sichtkontakt mit wenigstens zwei Reflektoren 420. Die wenigstens zwei Reflektoren 420 sind starr an der Rotorblattstruktur und/oder an dem Rotorblatt 100 befestigt. Somit sind die wenigstens zwei Reflektoren 420 zusammen mit der Rotorblattstruktur und/oder dem Rotorblatt 100 einer Verlagerung und/oder Torsion am Ort der Reflektorbefestigung ausgesetzt. In der bevorzugten Ausgestaltung umfasst die Kamera 455 Beleuchtungsmittel, wie beispielsweise Leuchtdioden (LEDs), um die Reflektoren 420 zu beleuchten. Die Reflektoren 420 werden an der ersten vorbestimmten Abstandslage positioniert, wobei diese Abstandslage derart gewählt ist, dass die Reflektoren 420 in Sichtkontakt mit der Kamera 455 bleiben, wenn das Rotorblatt 100 eine Verbiegung unter Last während des Windkraftanlagenbetriebs erfährt. Die erste Profilsehnenrichtung 140 wird nun definiert als Profilsehnenrichtung des Rotorblatts 100 in der Abstandslage der wenigstens zwei Reflektoren 420.

Die wenigstens zwei Reflektoren 420 definieren eine Reflektor-Achse oder Reflektorrichtung 160. In der bevorzugten Ausgestaltung wird diese Achse 160 durch die Mittelpunkte der Reflektoren 420 definiert, wobei aber auch jede andere Definition möglich ist, sofern die Definition eindeutig eine Achse in Bezug auf die Position der Reflektoren 420 definiert. Ein Winkel σ wird als Winkel zwischen der Reflektor-Achse 160 und der ersten Profilsehnenrichtung 140 definiert, wenn das Rotorblatt 100 unbelastet ist. Der Winkel σ wird, insbesondere nur einmal, für das Rotorblatt 100 berechnet und/oder erfasst und vorzugsweise in einer Recheneinheit (Auswerteeinheit) der Hauptmesseinheit 460 gespeichert. Die Kombination aus der Reflektor-Achse 160 und dem Winkel σ definiert einen ersten Profilsehnenrichtungslageindikator, insbesondere deshalb, da diese beiden Größen, nämlich die Reflektor-Achse und der Winkel σ, kombiniert werden können, um die Ausrichtung der ersten Profilsehnenrichtung 140 in der Abstandslage der Reflektoren 420 zu definieren.

Da die wenigstens zwei Reflektoren 420 starr an die Rotorblattstruktur und/oder das Rotorblatt 100 gebunden sind, beschreibt die Reflektor-Achse 160 die lokale Ausrichtung des Rotorblatts 100, wenn das Rotorblatt 100 eine Biegung und/oder eine Torsion aufgrund von Windlasten erfährt.

Das Bild der Reflektoren 420 auf einem lichtempfindlichen Element der Kamera 455 definiert die Reflektor-Achse 160 in Bezug auf einen Kamerakörper der Kamera 455. Die interne Orientierung zwischen dem lichtempfindlichen Element und den Gyroskop-Achsen {a1, a2, a3} wird, insbesondere einmal zum Zeitpunkt der Montage der Torsionswinkelerfassungseinheit 450, festgelegt und/oder gemessen und gespeichert, vorzugsweise bevor die Torsionswinkelerfassungseinheit 450 an der Rotorblattstruktur und/oder dem Rotorblatt 100 befestigt wird. Unter Verwendung dieses gespeicherten und/oder gemessenen Werts der internen Orientierung, wird die Orientierung der Reflektor-Achse 160 von dem lichtempfindlichen Element auf die Gyroskop-Achsen {a1, a2, a3} umgerechnet und der Wert an die Recheneinheit (Auswerteeinheit) der Hauptmesseinheit 460 übertragen.

Die Recheneinheit (Auswerteeinheit), die sowohl die Reflektor-Achse 160 als auch den Hauptwinkelgeschwindigkeitsvektor 36 in dem Koordinatensystem {a1, a2, a3} kennt, berechnet, insbesondere in Form eines Signals, den Winkel zwischen dem Winkelgeschwindigkeitsvektor 36 und der Reflektor-Achse 160. Unter Hinzufügung der gespeicherten Daten über die Orientierung σ der Reflektor-Richtung 160 relativ zu der ersten Profilsehnenrichtung 140 des Rotorblatts 100 wird, bevorzugt augenblicklich oder im Wesentlichen augenblicklich, ein erster Pitch-Winkel θ des Rotorblatts 100 berechnet und/oder ermittelt, der insbesondere ein wahrer Pitch-Winkel ist.

In einer weiteren Ausgestaltung wird eine zweite Profilsehnenrichtung 140' für das Rotorblatt 100 als Profilsehnenrichtung in einer zweiten vorgegebenen Abstandslage definiert. Reflektoren 420' werden starr an dem Rotorblatt 100 an der zweiten vorgegebenen Abstandslage befestigt, wobei die Reflektoren 420' eine zweite Reflektor-Achse oder Reflektorrichtung 160' definieren. Das Verfahren zur Ermittlung des ersten Pitch-Winkels θ des Rotorblatts 100 wird zum Ermitteln eines zweiten Pitch-Winkels des Rotorblatts 100 wiederholt, der insbesondere ein wahrer Pitch-Winkel ist. Zeitlich variierende Unterschiede zwischen dem ersten und dem zweiten Pitch-Winkel zeigen dabei die dynamische Torsionsbewegung des Rotorblatts 100. Ein Mittelwert aus dem ersten und zweiten Pitch-Winkel bildet insbesondere einen alternativen repräsentativen Pitch-Winkel für das Rotorblatt 100. Sowohl die dynamische Torsionsbewegung als auch der repräsentative Pitch-Winkel werden an eine zentrale Steuereinheit der Windkraftanlage übertragen, um insbesondere die Verwendung erweiterter Steuerungsalgorithmen zu ermöglichen.

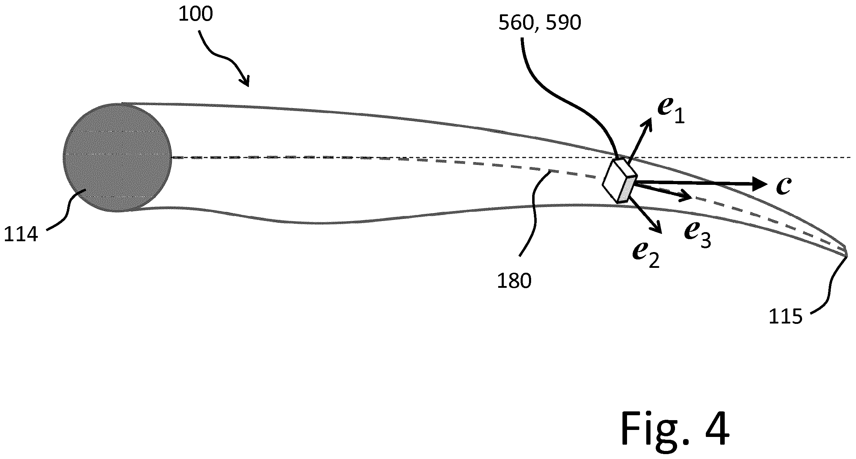

Aus Fig. 4 ist eine schematische Seitenansicht eines Rotorblatts 100 gemäß einer Variante oder zweiten Ausgestaltung ersichtlich, wobei die Torsionswinkelerfassungseinheit 450 einen 3-achsigen Beschleunigungsmesser 560 umfasst, der entlang der Längserstreckung des Rotorblatts 100 an einer beliebigen Stelle positioniert ist, an der insbesondere signifikante Biegungen des Rotorblatts 100 im Normalbetrieb auftreten, wie beispielsweise in der Nähe der Rotorblattspitze 115. Bevorzugt ist der Beschleunigungsmesser 560 in der oder einer ersten Abstandslage oder in einer anderen Abstandslage positioniert. Ohne Beschränkung der Allgemeinheit werden die Achsen {e1, e2, e3} des Beschleunigungsmessers 560 derart orientiert, dass die e3-Achse entlang und/oder in Richtung der Längsachse 180 des Rotorblatts 100 zeigt und/oder orientiert ist, wobei die e1-Achse und die e2-Achse insbesondere eine Querschnitts-Ebene in der Abstandslage des Beschleunigungsmessers 560 aufspannen. In Anwesenheit von Biegungen des Rotorblatts 100 während des Windkraftanlagenbetriebs weist der zentripetale Beschleunigungsvektor c eine Projektion auf die durch die Achsen {e1, e2} aufgespannte Querschnitts-Ebene des Rotorblatts 100 auf. Da die Orientierung des zentripetalen Beschleunigungsvektors c bekannt ist, nämlich senkrecht zu dem Hauptdrehgeschwindigkeitsvektor 36, und insbesondere ferner der Gravitationsbeschleunigungsvektor in der momentanen Azimutposition des Rotorblatts 100 aus der Windkraftanlagengeometrie berechnet wird, ist der Gesamtbeschleunigungsvektor an dem Beschleunigungsmesser 560 bekannt. Die Azimutposition charakterisiert dabei insbesondere die Drehlage des Rotorblatts 100 bezüglich der Rotorachse 35, vorzugsweise in Bezug auf eine Referenzdrehlage. Folglich kann der Torsionswinkel des oder am Ort des Beschleunigungsmessers 560, insbesondere durch eine Arkustangens-Berechnung der Komponenten des Beschleunigungsvektors c entlang der Achsen e1 und e2, bestimmt werden. Da die Position und die Orientierung des Beschleunigungsmessers 560 relativ zu der Profilsehnenrichtung des Rotorblatts 100 sowie relativ zu dem vorgewählten Blattkoordinatensystem {b1, b2, b3} an der Blattwurzel 114 bekannt sind, kann der momentane Winkel der Profilsehnenrichtung in Bezug auf das vorgewählte Blattkoordinatensystem {b1, b2, b3} an der Blattwurzel 114 berechnet werden. Der Torsionswinkel wird somit insbesondere durch eine Projektion der zentripetalen Beschleunigung und/oder des zentripetalen Beschleunigungsvektors c auf die Achsen {e1, e2, e3} gemessen und/oder erfasst und/oder bestimmt. In dieser Ausführungsform definiert die Kombination der Beschleunigungsmesser-Achsen {e1, e2, e3} und des oder eines Winkels σ den oder einen ersten Profilsehnenrichtungslageindikator, da die Projektionen der Beschleunigung auf die Beschleunigungsmesser-Achsen {e1, e2, e3} und der Winkel σ kombiniert werden können, um die Orientierung der ersten Profilsehnenrichtung in der Abstandslage der Reflektoren und/oder des Beschleunigungsmessers zu definieren. Gemäß einer Abwandlung wird anstelle des Beschleunigungsmessers 560 ein Gyroskop 590 eingesetzt. Bevorzugt wird in diesem Fall, vorzugsweise mittels des Gyroskops 590, eine Projektion des oder eines Drehwinkelgeschwindigkeitsvektors, der insbesondere durch die Drehbewegung des Rotorblatts 100 um die Rotorachse 35 definiert wird, auf die Achsen {e1, e2, e3} gemessen und/oder erfasst. Vorteilhaft wird der Torsionswinkel durch die Projektion des Drehwinkelgeschwindigkeitsvektors auf die Achsen {e1, e2, e3} erfasst und/oder bestimmt. Die Verwendung des Gyroskops 590 anstelle des Beschleunigungsmessers 560 ist insbesondere mit dem Vorteil verbunden, dass die Gravitation keine Rolle spielt, sodass bei der Bestimmung des Torsionswinkels der Gravitationsbeschleunigungsvektor in der momentanen Azimutposition des Rotorblatts 100 nicht berücksichtigt werden muss.

Diese direkte Messung des physikalischen Pitch-Winkels des Rotorblatts 100 ist unabhängig von einem Pitch-Winkeldrehgeber und somit auch frei von dessen Messfehlern.

Darüber hinaus wird der physikalische Pitch-Winkel bevorzugt automatisch, d.h. ohne manuellen Eingriff, und zeitlich kontinuierlich während des Windkraftanlagenbetriebs gemessen. Als weiterer Vorteil wird insbesondere der physikalische Pitch-Winkel aller Rotorblätter der Windkraftanlage, vorzugsweise kontinuierlich, verglichen und der Betrag einer physikalischen Pitch-Winkel-Asymmetrie zwischen den Rotorblättern bestimmt. Wenn dieser Wert oder Betrag einen vorbestimmten Schwellenwert überschreitet, wird insbesondere ein Alarm durch das Messsystem erzeugt und an die zentrale Steuereinheit der Windkraftanlage, an eine Windkraftanlagen-SCADA-Einheit oder an eine andere von dem Betreiber oder dem Hersteller der Windkraftanlage gewünschte Einheit gemeldet. Der Schwellenwert kann ausreichend gering eingestellt werden, um eine Pitch-Winkel-Asymmetrie in ihrem frühen Entstehungsstadium zu erfassen, insbesondere bevor signifikante, schädlich, zyklische Belastungen auftreten.

### Teil 2: Die eindeutige Kennzeichnung der Profilsehnen-Linie des Rotorblatts

Die Profilsehnen-Linie des Rotorblatts wird insbesondere konsistent und einzeln für jedes Rotorblatt der Windkraftanlage bestimmt. Aufgrund der glatten, gekrümmten Oberfläche des Rotorblatts 100 ist es im praktischen Einsatz schwierig, die Profilsehnen-Linie mit der erforderlichen Genauigkeit zu markieren. In der Praxis ist eine Genauigkeit von 0,5 Grad, vorzugsweise von 0,1 Grad, gewünscht. Weiterhin weist das Material des Rotorblatts 100 aus dem Herstellungsprozess herrührende Eigenspannungen auf, welche die Form des Rotorblatts 100 in einer bestimmten Weise verändern können, was die Definition einer eindeutigen und/oder konstanten und/oder gleichen Profilsehnen-Linie für alle Rotorblätter behindert oder erschwert. Zum Beispiel umfasst das Rotorblattmaterial typischerweise einen großen Anteil an Epoxid oder ähnlichen Harzen. Die Aushärtung von Epoxid und/oder der ähnlichen Harze ist aber ein exothermer Vorgang, der häufig starke Temperaturgradienten in dem Material während der Rotorblattherstellung erzeugt und daher aufgrund der Gradienten in der thermischen Ausdehnung des Materials Spannungen hervorruft, die in jedem Rotorblatt eingefroren sind.

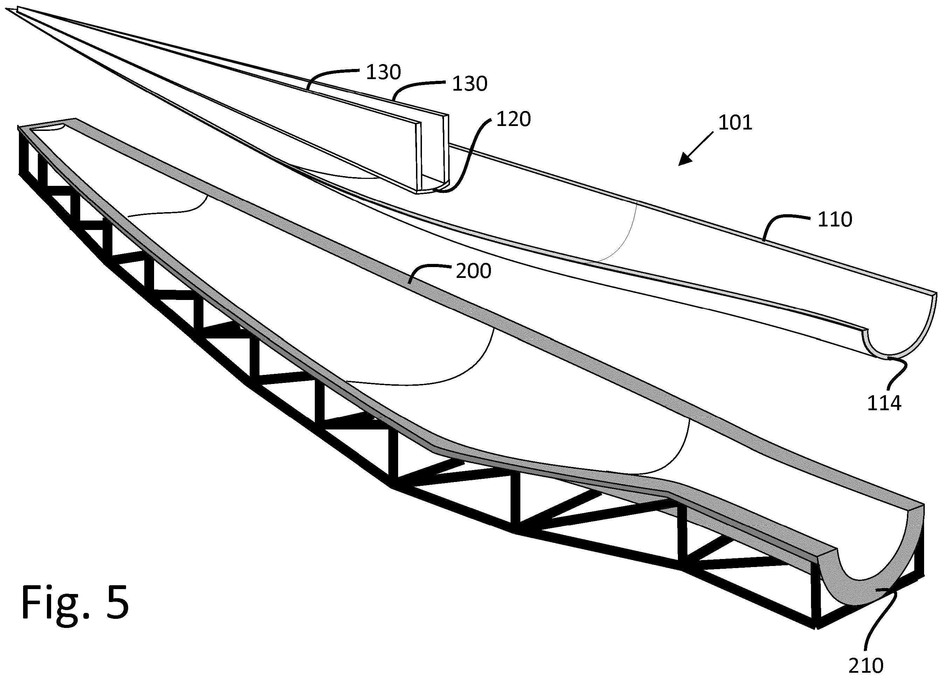

Eine eindeutige Profilsehnen-Linie wird gemäß einer ersten Ausführungsform, die insbesondere unter Bezugnahme auf die Fig. 5 bis 11 erläutert wird, durch die Verwendung eines mechanischen Referenzsystems 300 definiert, welches sich die Geometrie einer Herstellform 200 zunutze macht, in welcher das Rotorblatt 100 oder ein Rotorblattteil des Rotorblatts 100 hergestellt wird. Die Geometrie der Herstellform 200 ist eine eindeutige und gleiche und/oder konstante Größe, welche über alle mittels der Herstellform 200 hergestellten Rotorblätter invariant ist. Das mechanische Referenzsystem 300 schafft einen Zusammenhang zwischen dem Rotorblatt 100 und der Herstellform 200 in einer eindeutigen und wiederholbaren Weise dadurch, dass dieser Zusammenhang hergestellt wird, wenn das Rotorblatt 100 noch in der Herstellform 200 einliegt, und zwar nachdem das Aushärten abgeschlossen ist und bevor das Rotorblatt 100 von der Herstellform separiert wird. Insbesondere nimmt an diesem Punkt des Herstellungsprozesses das Rotorblatt 100 eine Konfiguration an, die, vorzugsweise per Definition, die oder eine belastungsfreie Konfiguration des Rotorblattes 100 ist und/oder den oder einen belastungsfreien Zustand des Rotorblattes kennzeichnet.

Das Rotorblatt 100 wird gemäß der ersten Ausführungsform aus der oder einer unteren Halbschale 101 und der oder einer oberen Halbschale 102 hergestellt, wobei die Halbschalen 101 und 102 zunächst, insbesondere separat, hergestellt und anschließend miteinander verbunden werden. Bevorzugt werden zusätzlich ein oder mehrere, die beiden Halbschalen 101 und 102 miteinander verbindende, Blattholme 130 vorgesehen und/oder montiert. Die Halbschalen 101 und 102 repräsentieren vorzugsweise die Saug- und die Druckseite des Rotorblatts 100. Die Rotorblatt-Halbschalen 101 und 102 werden insbesondere durch gedachtes Schneiden des vollständigen Rotorblatts 100 im Wesentlichen entlang der Profilsehnen-Linie des Rotorblattquerschnitts 105 gebildet, sodass die Verbindung zwischen der oberen und der unteren Halbschale 101, 102 an der Vorderkante 106 und an der Hinterkante 107 des Rotorblatts 100 erfolgt.

Unter Bezugnahme auf Fig. 5 sind die oder eine Herstellform 200 und die oder eine untere Halbschale 101 des Rotorblatts 100 gezeigt, wobei die untere Halbschale 101 zu Veranschaulichungszwecken gegenüber der Herstellform 200 versetzt dargestellt ist. Die untere Halbschale 101 umfasst eine Halbschalenhaut 110 und einen Holmgurt 120. Der Holmgurt 120 umfasst insbesondere starke, im Wesentlichen unidirektionale Fasern, die dem gesamten Rotorblatt 100 Festigkeit gegen Biegung des Rotorblatts 100 verleihen.

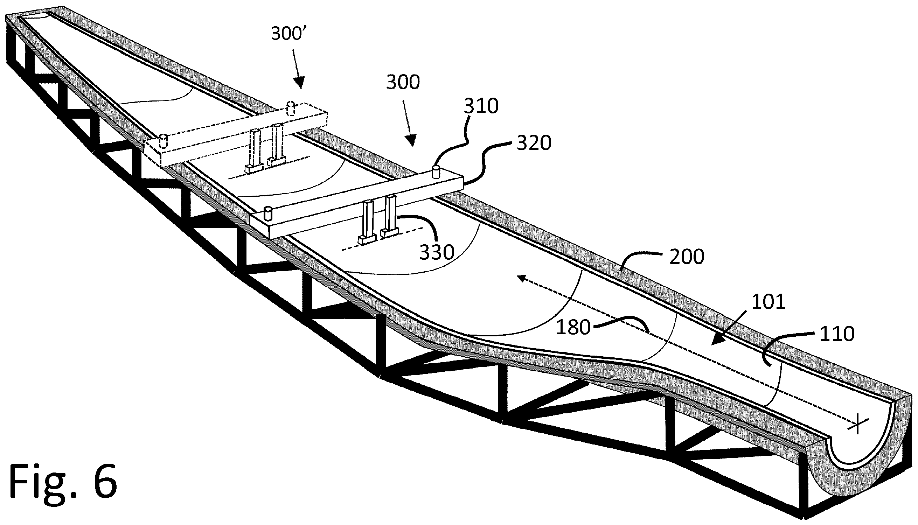

Gemäß Fig. 6 weist die Herstellform 200 Ausrichtungsstifte 310 zur Aufnahme und Ausrichtung einer Brückenkomponente 320 des mechanischen Referenzsystems 300 auf. Das mechanische Referenzsystem 300 bildet insbesondere ein Montagewerkzeug. Ferner werden die Ausrichtungsstifte 310 insbesondere als Montagemarkierungen bezeichnet. Nachdem die Halbschalenhaut 110 und der Holmgurt 120 in der Herstellform 200 hergestellt und ausgehärtet sind, aber bevor die untere Halbschale 101 der Herstellform 200 entnommen wird, wird das mechanische Referenzsystem 300 unter Verwendung der Ausrichtungsstifte 300 an der Herstellform 200 befestigt.

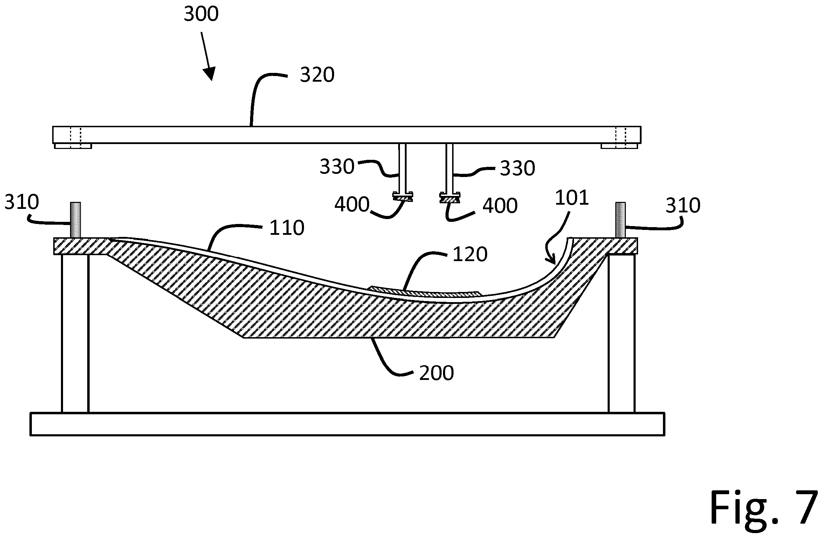

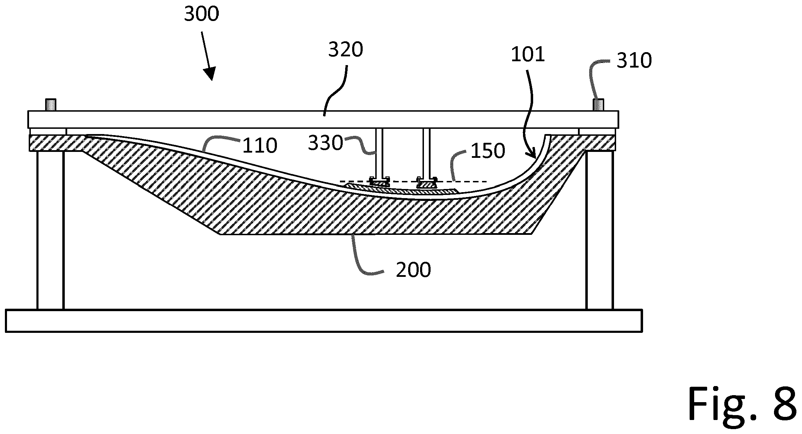

Das mechanische Referenzsystem 300 umfasst wenigstens einen Arm 330, der sich in Richtung der unteren Halbschale 101 erstreckt und lösbar einen Reflektorfuß 400 hält, was aus Fig. 7 ersichtlich ist. Wenn das mechanische Referenzsystem 300 mit den Ausrichtungsstiften 310 vollständig ineinandergreift, sodass es sich bezüglich der Herstellform 200 in seiner gewünschten Position befindet, ist der Reflektorfuß 400 an einer spezifizierten, vorbestimmten Position in Bezug auf die untere Halbschale 101 angeordnet, was aus Fig. 8 ersichtlich ist. Gemäß der ersten Ausführungsform lokalisiert das mechanische Referenzsystem 300 den Reflektorfuß 400 in der spezifizierten, vorbestimmten Position insbesondere über dem Holmgurt 120. Der Holmgurt 120, der aus einer festeren Materialzusammensetzung als die Halbschalenhaut 110 besteht, erfährt eine geringere Verformung in der Querschnittsebene, wenn das Rotorblatt 100 im Betrieb belastet wird. Folglich ist die Torsionsbewegung des Holmgurts 120 indikativer für die mittlere Torsionsbewegung des Rotorblattquerschnitts, als z.B. die Halbschalenhaut 110, wenn das Rotorblatt 100 unter Belastung steht.

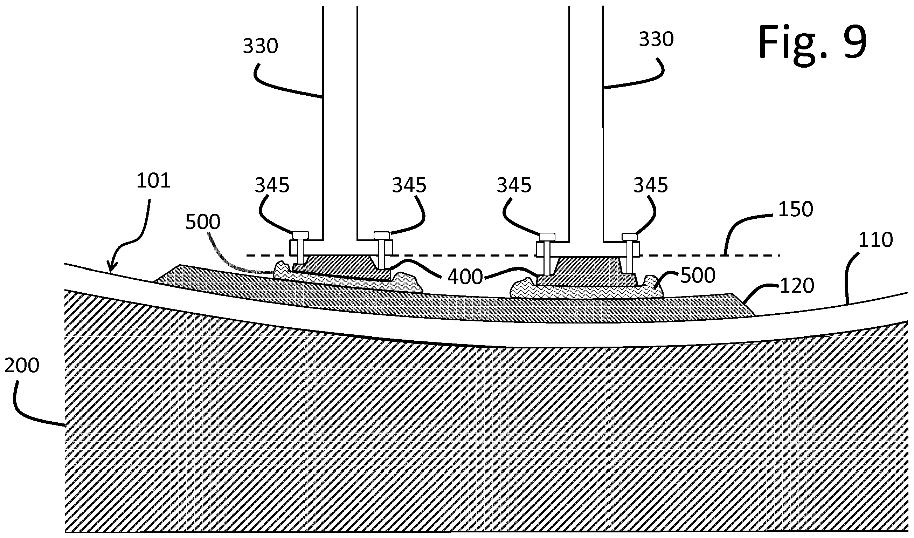

Gemäß der ersten Ausführungsform ist in der spezifizierten, vorbestimmten Position des Reflektorfußes 400 über dem Holmgurt 120 insbesondere ein Raum oder Spalt zwischen dem Reflektorfuß 400 und der Oberfläche des Holmgurts 120 vorgesehen. Dieser Raum oder Spalt wird mit einem Klebstoff 500 gefüllt, beispielsweise mit Epoxid oder einem ähnlichen Harz, was aus Fig. 9 ersichtlich ist. Gemäß der ersten Ausführungsform definiert der Reflektorfuß 400 eine Referenzfläche 150, die eindeutig und fest und/oder starr in Bezug auf die lokale Profilsehnen-Linie des Rotorblattquerschnitts am Ort des Reflektorfußes 400 positioniert ist. Die Referenzfläche 150 ist entweder parallel zu der lokalen Profilsehnen-Linie oder gegenüber der lokalen Profilsehnen-Linie um einen vorbestimmten Betrag drehversetzt. Die lokale Profilsehnen-Linie wird als erste Profilsehnenrichtung ausgewählt.

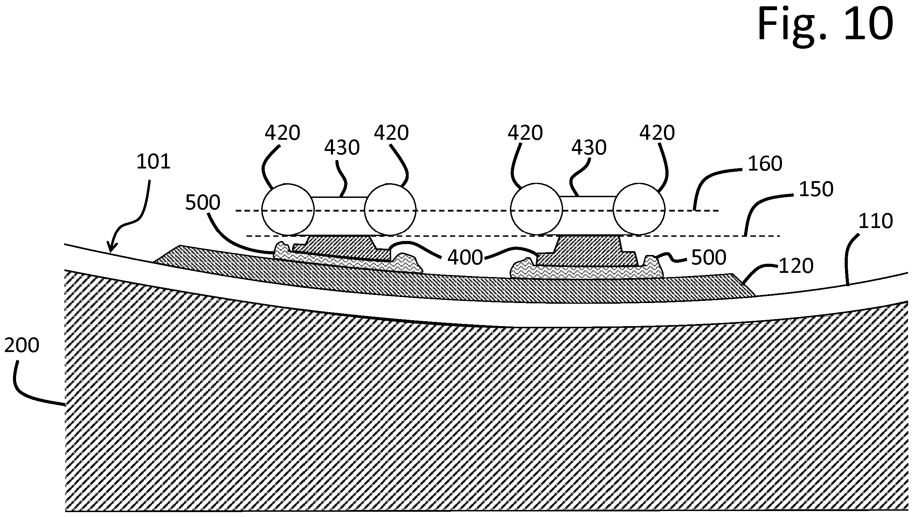

Nachdem der Klebstoff 500 ausgehärtet ist, wird der wenigstens eine Arm 330, der hier insbesondere durch lösbare Befestigungsmittel 345 in Form von Schrauben mit dem Reflekorfuß 400 verbunden ist, vom Reflektorfuß 400 gelöst und abgenommen und ein Reflektorkörper 430, der ein oder mehrere Reflektoren 420 umfasst, an dem Reflektorfuß 400 befestigt, was aus Fig. 10 ersichtlich ist. Insgesamt werden wenigstens zwei Reflektoren 420 an der Rotorblatt-Halbschale 101 montiert, sodass die durch einen vorbestimmten Abstand voneinander getrennten Mittelpunkte der Reflektoren 420 eine Reflektorrichtung 160 definieren. Gemäß der ersten Ausführungsform werden insbesondere zwei Reflektorfüße 400 verwendet, von denen jeder vorzugsweise zwei Reflektoren 420 hält, sodass ein Reflektor-Muster aus vier oder mehr im Wesentlichen linear ausgerichteten Reflektoren 420 geschaffen wird, wobei das Reflektor-Muster direkt oder indirekt, z.B. im Sinne der kleinsten Quadrate, die Reflektorrichtung 160 definiert.

Bevorzugt bildet oder bilden die Reflektoren 420 und/oder der oder die Reflektorfüße 400 und/oder der Reflektorkörper 430, vorzugsweise zusammen, einen Profilsehnenrichtungsindikator, der insbesondere fest mit dem Rotorblatt 100 verbunden ist oder wird. Ferner bildet die Reflektorrichtung 160 und/oder die Reflektor-Achse 160 insbesondere eine Profilsehnenrichtungsindikator-Richtung.

Die Reflektoren 420 werden vorzugsweise auf dem Reflektorkörper 430 montiert, bevor irgendeine Tätigkeit bezüglich der Rotorblattmontage vorgenommen wird, und insbesondere optisch kalibriert. Die Kalibrierung umfasst bevorzugt die optische Messung der Reflektorrichtung 160 und vorzugsweise die Messung des Winkels zwischen der Reflektorrichtung 160 und der Referenzfläche und/oder einer Fläche des Reflektorkörpers 430, die mit dem Reflektorfuß 400 zusammentrifft, welche insbesondere der Referenzfläche 150 entspricht. Nachdem der Reflektorkörper 430 an dem Reflektorfuß 400 befestigt ist, ist der Winkel zwischen der Reflektorrichtung 160 und der Referenzfläche 150 bekannt.

Wenn die zweite Profilsehnenrichtung für das Rotorblatt 100 definiert werden soll, wird ein zweites mechanisches Referenzsystem 300' an der zweiten vorgegebenen Abstandslage verwendet, was aus Fig. 6 ersichtlich ist. Das gleiche Verfahren, welches zur Montage der Reflektorfüße 400 an der ersten vorgegebenen Abstandslage verwendet wurde, wird wiederholt, um Reflektorfüße an der zweiten vorgegebenen Abstandslage zu montieren.

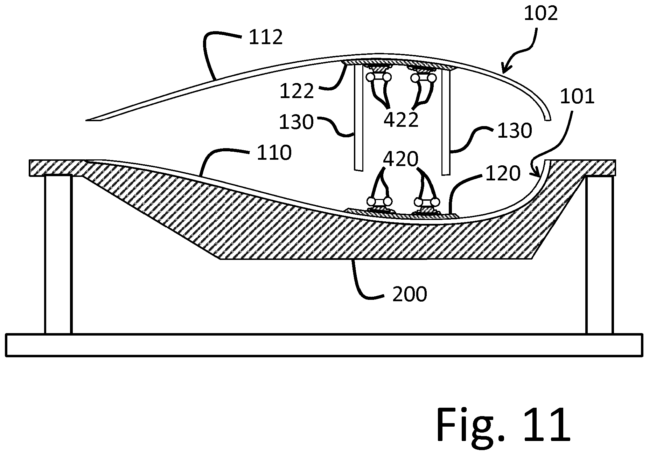

Die obere Halbschale 102 wird mit einem gleichartigen Verfahren in einer zweiten Rotorblatt-Halbform und/oder Herstellform hergestellt. In diesem Verfahren wird eine zusätzliche Gruppe von Reflektoren 422 vorzugsweise an einem oberen Holmgurt 122 befestigt. Wenn die obere und die untere Halbschale zum Miteinanderverbinden zusammengebracht werden, was aus Fig. 11 ersichtlich ist, umfasst das komplette Reflektormuster eine Vielzahl von Reflektoren, welche die Profilsehnenrichtung insbesondere überbestimmen. Die Überbestimmung ist vorteilhaft, da sie es ermöglicht, die Profilsehnenrichtung des Rotorblatts in einer robusteren Art und Weise auszudrücken, z.B. als ein Mittel aus der oberen und unteren Reflektor-Muster-Richtung.

Gemäß der Variante, wonach die Torsionswinkelerfassungseinheit 450 und/oder der oder ein Profilsehnenrichtungsindikator den an einer vorbestimmen Abstandslage in dem Rotorblatt 100 angeordneten Beschleunigungsmesser 560 umfasst, folgt die Befestigung des Beschleunigungsmessers 560 an der Innenoberfläche des Rotorblatts 100 den oben für die Reflektoren genannten Schritten, mit dem Unterschied, dass das Gehäuse des Beschleunigungsmessers 560 den Reflektorkörper 430 ersetzt. Insbesondere orientiert die Befestigung des Gehäuses des Beschleunigungsmessers 560 an dem Reflektorfuß 400 das Gehäuse des Beschleunigungsmessers 560 entlang der Referenzfläche 150, wodurch der Beschleunigungsmesser 560 sowohl in Bezug auf die Profilsehnenrichtung als auch in Bezug auf die Blattwurzel 114 eindeutig ausgerichtet wird.

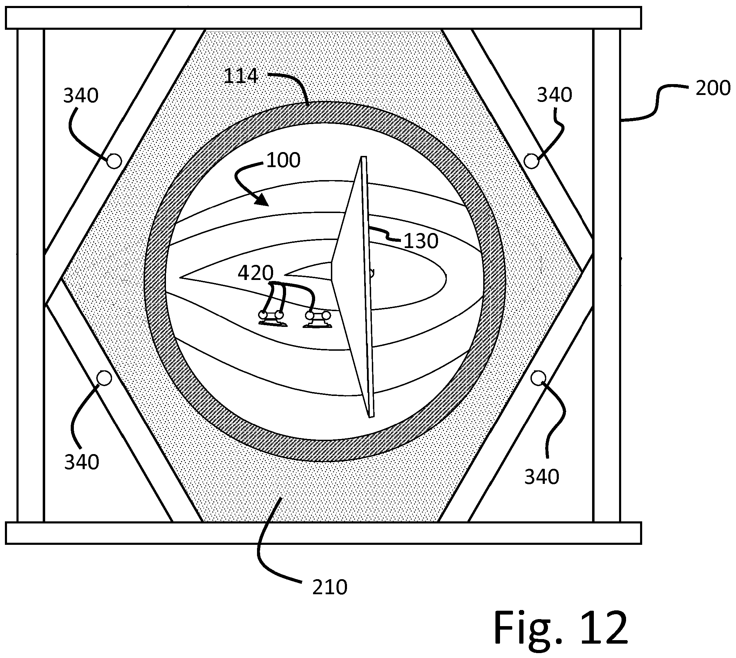

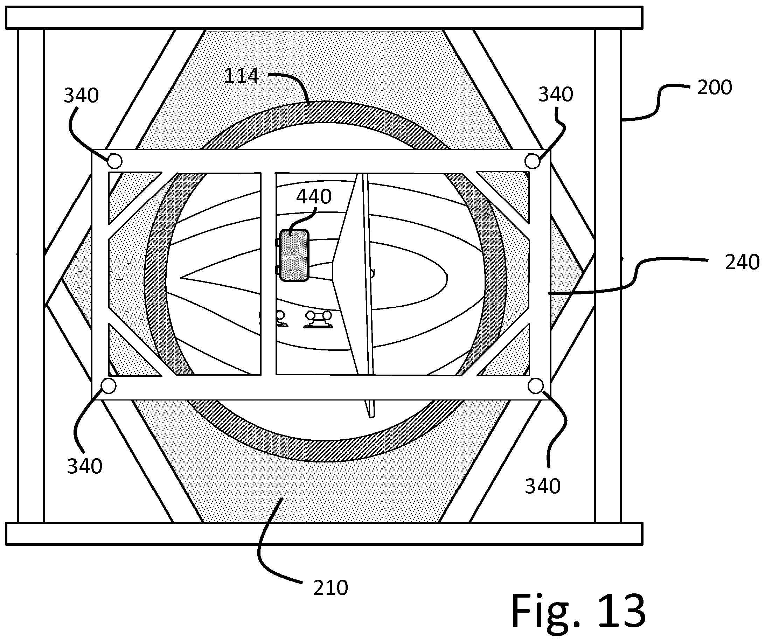

Gemäß einer zweiten Ausführungsform wird das gesamte Rotorblatt 100 als eine monolithische Einheit hergestellt, wobei z.B. Airbags oder ähnliche Geräte verwendet werden, welche während der Harzinjektion und Aushärtung einen Kern bilden und/oder den leeren Innenraum des Rotorblatts besetzen. Die zweite Ausführungsform wird insbesondere unter Bezugnahme auf die Fig. 12 und 13 erläutert. Gemäß der zweiten Ausführungsform kann das mechanische Referenzsystem 300 insbesondere nicht verwendet werden. Um die optischen Markierungen an der Innenoberfläche des Rotorblatts 100 an ausgewählten Abstandslagen vorzusehen, wird nach dem Aushärten des Rotorblatts 100 wenigstens ein Reflektorkörper 430 mit wenigstens zwei Reflektoren 420 an der Innenoberfläche des Rotorblatts 100 befestigt, und zwar bevor das Rotorblatt 100 der Herstellform 200 entnommen wird. Das Verkleben des Reflektorkörpers 430 wird insbesondere ohne engeren Bezug zur Herstellform 200 durchgeführt, welche von der Innenseite des Rotorblatts 100 her nicht sichtbar ist. Somit ist die Winkeldifferenz zwischen der Reflektorrichtung 160 und der Profilsehnenrichtung des Rotorblatts 100 nicht bekannt. Um diese Winkeldifferenz zu quantifizieren, werden an einer, insbesondere der Blattwurzel zugeordneten, Blattwurzelposition 210 der Herstellform 200 Referenzstifte 340 an der Herstellform 200 befestigt und/oder vorgesehen. Die Referenzstifte 340 werden eingesetzt, um einen Hilfsrahmen 240 aufzunehmen und den Hilfsrahmen 240 eindeutig und reproduzierbar in Bezug auf die Herstellform 200 zu positionieren. Eine Referenzkamera 440 wird an einer vorbestimmten Stelle und mit einer vorbestimmten Orientierung an dem Hilfsrahmen 240 befestigt, sodass die Referenzkamera 440 eine bekannte, vorbestimmte Orientierung in Bezug auf die Profilsehnenrichtung des Rotorblatts 100 aufweist. Die Referenzkamera 440 ist ferner in Sichtkontakt mit dem wenigstens einen Reflektorkörper 430 und kann daher die Reflektorrichtung 160 messen. Die Position der Referenzkamera 440 in Bezug auf die Blattwurzel 114 muss dabei nicht die gleiche sein wie die Position der Kamera 455, die während des Windkraftanlagenbetriebs verwendet wird.

Insbesondere bildet der Hilfsrahmen 240, vorzugsweise zusammen mit der Referenzkamera 440, ein Messwerkzeug. Ferner werden die Referenzstifte 340 insbesondere als Messmarkierungen bezeichnet.

Durch die Kombination der gemessenen Reflektorrichtung 160 und der vordefinierten Orientierung der Referenzkamera 440 in Bezug auf die Profilsehnenrichtung des Rotorblatts 100, wird die Winkelausrichtung der Reflektorrichtung 160 in Bezug auf die Profilsehnenrichtung des Rotorblatts 100 berechnet und/oder erfasst und für die Verwendung während des Windkraftanlagenbetriebs gespeichert.

### Bezugszeichenliste

- 10: Maschinenträger
- 20: Rotornabe
- 30: Rotorwelle
- 35: Rotorachse
- 36: Hauptdrehgeschwindigkeitsvektor
- 40: Blattlager
- 50: elektrischer Generator
- 100: Rotorblatt
- 101: untere Blatthälfte des Rotorblatts
- 102: obere Blatthälfte des Rotorblatts
- 104: Abschlussplatte des Rotorblatts
- 105: Blattquerschnitt des Rotorblatts
- 106: Vorderkante des Rotorblatts
- 107: Hinterkante des Rotorblatts
- 110: Haut der unteren Blatthälfte
- 112: Haut der oberen Blatthälfte
- 114: Blattwurzel des Rotorblatts
- 115: Blattspitze des Rotorblatts
- 120: Holmgurt der unteren Blatthälfte des Rotorblatts
- 122: oberer Holmgurt
- 130: Blattholm des Rotorblatts
- 140: (erste) Profilsehne/Profilsehnenrichtung des Rotorblatts
- 140': zweite Profilsehne/Profilsehnenrichtung des Rotorblatts
- 150: Referenzfläche
- 160: Profilsehnenrichtung / Reflektor-Achse / Reflektorrichtung
- 180: Blattlängsachse des Rotorblatts
- 200: Herstellform
- 210: Blattwurzelposition der Herstellform
- 240: Hilfsrahmen / Messwerkzeug
- 300: mechanisches Referenzsystem / Montagewerkzeug
- 300': zweites mechanisches Referenzsystem
- 310: Ausrichtungsstifte / Montagemarkierungen
- 320: Brückenkomponente des mechanischen Referenzsystems
- 330: Arm des mechanisches Referenzsystems
- 340: Referenzstifte / Messmarkierungen
- 345: lösbare Befestigungsmittel / Schrauben
- 400: Reflektorfuß
- 420: Reflektor
- 422: zusätzliche Gruppe von Reflektoren
- 430: Reflektorkörper
- 440: Referenzkamera
- 450: Torsionswinkelerfassungseinheit
- 455: Kamera der Torsionswinkelerfassungseinheit
- 460: Hauptmesseinheit
- 490: Blattwurzelwinkelerfassungseinheit / Gyroskop
- 500: Klebstoff
- 560: Beschleunigungsmesser
- 590: Gyroskop
- θ: Pitch-Winkel
- σ: Winkel
- c: Beschleunigungsvektor
- {b1, b2, b3}: Blattkoordinatensystem an der Blattwurzel
- {a1, a2, a3}: Koordinatensystem des Gyroskops
- {e1, e2, e3}: Koordinatensystem des Beschleunigungsmessers

## Patentansprüche

1. Verfahren zur Pitch-Winkelmessung und/oder zum Aufbau eines Messsystems zur Pitch-Winkelmessung an einem eine Blattwurzel (114) aufweisenden und sich in Richtung einer Blattlängsachse (180) erstreckenden Rotorblatt (100) einer Windkraftanlage, welches mit seiner Blattwurzel (114) an einer um eine Rotorachse (35) drehenden oder drehbaren Rotornabe (20) der Windkraftanlage um die Blattlängsachse (180) drehbar gelagert ist oder wird, wobei im Abstand zur Blattwurzel (114) wenigstens ein Profilsehnenrichtungsindikator (430) fest mit dem Rotorblatt (100) verbunden wird, der eine Profilsehnenrichtungsindikator-Richtung (160) definiert, die indikativ für eine Richtung einer Profilsehne (140) des Rotorblatts (100) am Ort des Profilsehnenrichtungsindikators (430) ist, mittels wenigstens einer Torsionswinkelerfassungseinheit (450) ein Torsionswinkel des Rotorblatts (100) erfasst wird, um welchen die Profilsehnenrichtungsindikator-Richtung (160) relativ zu einer Profilsehnenrichtungsindikator-Referenzrichtung verdreht ist, mittels einer Blattwurzelwinkelerfassungseinheit (490) ein Blattwurzelwinkel erfasst wird, um welchen die Blattwurzel (114) relativ zu einer Blattwurzelreferenzlage um die Blattlängsachse (180) verdreht ist, und mittels einer Auswerteeinheit auf Basis des Torsionswinkels und des Blattwurzelwinkels ein Pitch-Winkel (θ) des Rotorblatts (100) am Ort des Profilsehnenrichtungsindikators (430) ermittelt wird, wobei das Rotorblatt (100) oder wenigstens ein mit dem Profilsehnenrichtungsindikator (430) fest verbundenes Rotorblattteil (101) des Rotorblatts vor seinem Verbinden mit dem Profilsehnenrichtungsindikator (430) in einer Herstellform (200) hergestellt wird, der Profilsehnenrichtungsindikator (430) in einer Lage, die relativ zu der Herstellform (200) definiert wird, fest mit dem Rotorblatt (100) oder Rotorblattteil (101) verbunden wird, während das Rotorblatt (100) oder Rotorblattteil (101) in der Herstellform (200) einliegt, und die Lage des Profilsehnenrichtungsindikators (430) relativ zu der Herstellform (200) mittels wenigstens eines Werkzeugs (300; 240) definiert wird, welches relativ zu der Herstellform (200) ausgerichtet wird.

2. Verfahren nach Anspruch 1, **dadurch gekennzeichnet, dass** die Herstellform (200) mit mehreren Herstellform-Markierungen (310, 340) versehen wird, mittels welchen das Werkzeug (300; 240) relativ zu der Herstellform (200) ausgerichtet wird.

3. Verfahren nach Anspruch 1 oder 2, **dadurch gekennzeichnet, dass** die Herstellform (200) mit mehreren Montagemarkierungen (310) versehen wird, an welchen wenigstens ein Montagewerkzeug (300) angesetzt wird, mittels welchem der Profilsehnenrichtungsindikator (430) oder wenigstens ein Profilsehnenrichtungsindikatorhalter (400) zum Halten des Profilsehnenrichtungsindikators (430) relativ zu der Herstellform (200) positioniert wird, wonach der Profilsehnenrichtungsindikator (430) oder Profilsehnenrichtungsindikatorhalter (400) fest mit dem Rotorblatt (100) oder Rotorblattteil (101) verbunden wird.

4. Verfahren nach einem der vorangehenden Ansprüche, **dadurch gekennzeichnet, dass** die Herstellform (200) mit mehreren Messmarkierungen (340) versehen wird, an welchen ein Messwerkzeug (240, 440) angesetzt wird, mittels welchem die Lage des bereits mit dem Rotorblatt (100) oder Rotorblattteil (101) fest verbundenen Profilsehnenrichtungsindikators (430) relativ zu der Herstellform (200) erfasst und somit definiert wird.

5. Verfahren nach einem der vorangehenden Ansprüche, **dadurch gekennzeichnet, dass** während das Rotorblatt (100) oder Rotorblattteil (101) in der Herstellform (200) einliegt, die Profilsehnenrichtungsindikator-Referenzrichtung definiert wird.

6. Verfahren nach Anspruch 5, **dadurch gekennzeichnet, dass** die Profilsehnenrichtungsindikator-Referenzrichtung relativ zu der Herstellform (200) definiert oder ermittelt wird.

7. Verfahren nach einem der vorangehenden Ansprüche, **dadurch gekennzeichnet, dass** das Rotorblatt (100) aus zwei Rotorblatthalbschalen (101, 102) zusammengesetzt wird, von denen eine das Rotorblattteil (101) bildet.

8. Verfahren nach einem der vorangehenden Ansprüche, **dadurch gekennzeichnet, dass** der Profilsehnenrichtungsindikator (430) mit wenigstens zwei entlang der Profilsehnenrichtungsindikator-Richtung (160) nebeneinander angeordneten Profilsehnenrichtungsindikator-Markierungen (420) versehen wird, und die Torsionswinkelerfassungseinheit (540) wenigstens einen optischen Sensor aufweist, mittels welchem die Profilsehnenrichtungsindikator-Markierungen (420) optisch erfasst werden.

9. Verfahren nach einem der vorangehenden Ansprüche, **dadurch gekennzeichnet, dass** die Torsionswinkelerfassungseinheit (450) an oder im Bereich der Blattwurzel fest mit dem Rotorblatt (100) verbunden wird.

10. Verfahren nach einem der vorangehenden Ansprüche, **dadurch gekennzeichnet, dass** die Profilsehnenrichtungsindikator-Referenzrichtung indikativ für die Profilsehnenrichtungsindikator-Richtung (160) in einem nicht tordierten Zustand des Rotorblatts (100) ist.

11. Verfahren nach einem der vorangehenden Ansprüche, **dadurch gekennzeichnet, dass** die Blattwurzelreferenzlage und die Profilsehnenrichtungsindikator-Referenzichtung relativ zueinander festgelegt sind oder werden.

12. Verfahren nach einem der vorangehenden Ansprüche, **dadurch gekennzeichnet, dass** der Torsionswinkel und der Blattwurzelwinkel in einem blattwurzelfesten Bezugssystem (b1, b2, b3) erfasst werden, welches in dem unbelasteten Zustand des Rotorblatts (100) definiert wird.

13. Verfahren nach Anspruch 12, **dadurch gekennzeichnet, dass** die Blattwurzelreferenzlage und die Profilsehnenrichtungsindikator-Referenzrichtung in dem blattwurzelfesten Bezugssystem (b1, b2, b3) definiert sind oder werden.

14. Verfahren nach einem der vorangehenden Ansprüche, **dadurch gekennzeichnet, dass** die Blattwurzelwinkelerfassungseinheit (490) an oder im Bereich der Blattwurzel (114) fest mit dem Rotorblatt (100) verbunden wird und relativ zu der Torsionswinkelerfassungseinheit (450) ortsfest ist.

## Claims

1. Method for the pitch angle measurement and/or for the construction of a measuring system for pitch angle measurement on a rotor blade (100) of a wind turbine, having a blade root (114) and extending in the direction of a blade longitudinal axis (180), the blade root (114) of which rotor blade is or becomes rotatably mounted on a rotor hub (20) of the wind turbine that rotates or can rotate about a rotor axis (35), wherein at a distance from the blade root (114) at least one tread chord width direction indicator (430) is firmly connected to the rotor blade (100) that defines a tread chord width direction indicator direction (160) which is indicative of a direction of a tread chord width (140) of the rotor blade (100) at the location of the tread chord width direction indicator (430), by means of at least one torsion angle determination unit (450) a torsion angle of the rotor blade (100) is determined by which the tread chord width direction indicator direction (160) is rotated relative to a tread chord width direction indicator reference direction, by means of a blade root angle determination unit (490) a blade root angle is determined by which the blade root (114) is rotated about the blade length axis (180) relative to a blade root reference position and by means of an analysis unit a pitch angle (8) of the rotor blade (100) at the location of the tread chord width direction indicator (430) is determined on the basis of the torsion angle and the blade root angle, wherein the rotor blade (100) or at least a rotor blade part (101) of the rotor blade that is firmly connected to the tread chord width direction indicator (430) is manufactured in a manufacturing mould (200) before it is connected to the tread chord width direction indicator (430), which tread chord width direction indicator (430) is firmly connected to the rotor blade (100) or the rotor blade part (101) in a position that is defined relative to the manufacturing mould (200), while the rotor blade (100) or rotor blade part (101) is inserted into the manufacturing mould (200) and the position of the tread chord width direction indicator (430) relative to the manufacturing mould (200) is defined by means of at least one tool (300; 240) which is aligned relative to the manufacturing mould (200).

2. Method according to Claim 1, **characterised in that** the manufacturing mould (200) is provided with several manufacturing mould markings (310, 340), by means of which the tool (300; 240) is aligned relative to the manufacturing mould (200).

3. Method according to either Claim 1 or 2, **characterised in that** the manufacturing mould (200) is provided with several installation markings (310) on which at least one installation tool (300) is positioned, by means of which the tread chord width direction indicator (430) or at least one tread chord width direction indicator holder (400) is positioned relative to the manufacturing mould (200) to hold the tread chord width direction indicator (430), whereupon the tread chord width direction indicator (430) or tread chord width direction indicator holder (400) is firmly attached to the rotor blade (100) or rotor blade part (101).

4. Method according to any one of the preceding claims, **characterised in that** the manufacturing mould (200) is provided with several measuring markings (340), on which a measuring tool (240, 440) is positioned, by means of which the position of the tread chord width direction indicator (430) that is already firmly connected to the rotor blade (100) or rotor blade part (101) relative to the manufacturing mould (200) is determined and therefore defined.

5. Method according to any one of the preceding claims, **characterised in that** while the rotor blade (100) or rotor blade part (101) is inserted in the manufacturing mould (200), the tread chord width direction indicator reference direction is defined.

6. Method according to Claim 5, **characterised in that** the tread chord width direction indicator reference direction is defined or determined relative to the manufacturing mould (200).

7. Method according to any one of the preceding claims, **characterised in that** the rotor blade (100) is comprised of two rotor blades half shells (101, 102), one of which forms the rotor blade part (101).

8. Method according to any one of the preceding claims,
**characterised in that** the tread chord width direction indicator (430) is provided with at least two tread chord width direction indicator marks (420) arranged adjacent to one another along the tread chord width direction indicator direction (160) and the torsion angle determination unit (540) has at least one optical sensor, by means of which the tread chord width direction indicator markings (420) can be determined optically.

9. Method according to any one of the preceding claims, **characterised in that** the torsion angle determination unit (450) is firmly connected to the rotor blade (100) on or in the region of the blade root.

10. Method according to any one of the preceding claims, **characterised in that** the tread chord direction indicator reference direction is indicative of the tread chord width direction indicator direction (160) when the rotor blade (100) is not twisted.

11. Method according to any one of the preceding claims, **characterised in that** the blade root reference length and the tread chord width direction indicator reference direction are determined relative to one another.

12. Method according to any one of the preceding claims,
**characterised in that** the torsion angle and the blade root angle are determined in a fixed blade root reference system (b1, b2, b3) which is defined when the rotor blade (100) is unladen.

13. Method according to Claim 12, **characterised in that** the blade root reference position and the tread chord width direction indicator reference direction is or becomes defined in the fixed blade root reference system (b1, b2, b3).

14. Method according to any one of the preceding claims, **characterised in that** the blade root angle determination unit (490) is firmly connected to the rotor blade (100) on or in the region of the blade root (114) and is fixed relative to the torsion angle determination unit (450).

## Revendications

1. Procédé de mesure d'angle de calage et/ou de construction d'un système de mesure pour la mesure d'angle de calage sur une pale de rotor (100) d'une éolienne présentant un pied de pale (114) et s'étendant en direction d'un axe longitudinal de pale (180), laquelle avec son pied de pale (114) est montée en rotation autour de l'axe longitudinal de pale (180) sur un moyeu de rotor (20) de l'éolienne tournant ou pouvant tourner autour d'un axe de rotation (35), dans lequel à distance du pied de pale (114) au moins un indicateur de direction de corde de profil (430) est relié fixement à la pale de rotor (100), qui définit une direction d'indicateur de direction de corde de profil (160), qui indique une direction d'une corde de profil (140) de la pale de rotor (100) à l'emplacement de l'indicateur de direction de corde de profil (430), un angle de torsion de la pale de rotor (100) selon lequel la direction d'indicateur de direction de corde de profil (160) est amenée en rotation par rapport à une direction de référence d'indicateur de direction de corde de profil est détecté au moyen d'au moins une unité de détection d'angle de torsion (450), un angle de pied de pale selon lequel le pied de pale (114) est amené en rotation par rapport à une position de référence de pied de pale autour de l'axe longitudinal de pale (180) est détecté au moyen d'une unité de détection d'angle de pied de pale (490), et un angle de calage (0) de la pale de rotor (100) à l'emplacement de l'indicateur de direction de corde de profil (430) est déterminé au moyen d'une unité d'évaluation sur la base de l'angle de torsion et de l'angle de pied de pale, dans lequel la pale de rotor (100) ou au moins une partie de pale de rotor (101) de la pale de rotor reliée fixement à l'indicateur de direction de corde de profil (430) est fabriquée avant sa liaison à l'indicateur de direction de corde de profil (430) dans un moule de fabrication (200), l'indicateur de direction de corde de profil (430) est relié fixement à la pale de rotor (100) ou partie de pale de rotor (101) dans une position qui est définie par rapport au moule de fabrication (200), pendant que la pale de rotor (100) ou partie de pale de rotor (101) est logée dans le moule de fabrication (200), et la position de l'indicateur de direction de corde de profil (430) par rapport au moule de fabrication (200) est définie au moyen d'au moins un outil (300 ; 240), lequel est orienté par rapport au moule de fabrication (200).

2. Procédé selon la revendication 1, **caractérisé en ce que** le moule de fabrication (200) est pourvu de plusieurs marquages de moule de fabrication (310, 340), au moyen desquels l'outil (300 ; 240) est orienté par rapport au moule de fabrication (200).

3. Procédé selon la revendication 1 ou 2, **caractérisé en ce que** le moule de fabrication (200) est pourvu de plusieurs marquages de montage (310), sur lesquels au moins un outil de montage (300) est appliqué, au moyen duquel l'indicateur de direction de corde de profil (430) ou au moins un support d'indicateur de direction de corde de profil (400) destiné à supporter l'indicateur de direction de corde de profil (430) par rapport au moule de fabrication (200) est positionné, après quoi l'indicateur de direction de corde de profil (430) ou le support d'indicateur de direction de corde de profil (400) est relié fixement à la pale de rotor (100) ou partie de pale de rotor (101).

4. Procédé selon l'une quelconque des revendications précédentes, **caractérisé en ce que** le moule de fabrication (200) est pourvu de plusieurs marquages de mesure (340), sur lesquels un outil de mesure (240, 440) est appliqué, au moyen duquel la position de l'indicateur de direction de corde de profil (430) déjà relié fixement à la pale de rotor (100) ou partie de pale de rotor (101) par rapport au moule de fabrication (200) est détectée et ainsi définie.

5. Procédé selon l'une quelconque des revendications précédentes, **caractérisé en ce que** pendant que la pale de rotor (100) ou partie de pale de rotor (101) est logée dans le moule de fabrication (200), la direction de référence d'indicateur de direction de corde de profil est définie.

6. Procédé selon la revendication 5, **caractérisé en ce que** la direction de référence d'indicateur de direction de corde de profil par rapport au moule de fabrication (200) est définie ou déterminée.

7. Procédé selon l'une quelconque des revendications précédentes, **caractérisé en ce que** la pale de rotor (100) est composée de deux demi-coques de pale de rotor (101, 102), dont une forme la partie de pale de rotor (101).

8. Procédé selon l'une quelconque des revendications précédentes, **caractérisé en ce que** l'indicateur de direction de corde de profil (430) est pourvu d'au moins deux marquages d'indicateur de direction de corde de profil (420) disposés l'un à côté de l'autre le long de la direction d'indicateur de direction de corde de profil (160), et l'unité de détection d'angle de torsion (540) présente au moins un capteur optique, au moyen duquel les marquages d'indicateur de direction de corde de profil (420) sont détectés optiquement.

9. Procédé selon l'une quelconque des revendications précédentes, **caractérisé en ce que** l'unité de détection d'angle de torsion (450) est reliée fixement à la pale de rotor (100) sur ou dans la zone du pied de pale.

10. Procédé selon l'une quelconque des revendications précédentes, **caractérisé en ce que** la direction de référence d'indicateur de direction de corde de profil indique la direction d'indicateur de direction de corde de profil (160) dans un état non tordu de la pale de rotor (100).

11. Procédé selon l'une quelconque des revendications précédentes, **caractérisé en ce que** la position de référence de pied de pale et la direction de référence d'indicateur de direction de corde de profil sont établies l'une par rapport à l'autre.

12. Procédé selon l'une quelconque des revendications précédentes, **caractérisé en ce que** l'angle de torsion et l'angle de pale de rotor sont détectés dans un système de référence (b1, b2, b3) fixé au pied de pale, lequel est défini dans l'état non sollicité de la pale de rotor (100).

13. Procédé selon la revendication 12, **caractérisé en ce que** la position de référence de pied de pale et la direction de référence d'indicateur de direction de corde de profil sont définies dans le système de référence (b1, b2, b3) fixé au pied de pale.

14. Procédé selon l'une quelconque des revendications précédentes, **caractérisé en ce que** l'unité de détection d'angle de pied de pale (490) est reliée fixement à la pale de rotor (100) sur ou dans la zone du pied de pale (114) et est fixe par rapport à l'unité de détection d'angle de torsion (450).
